# EUROPÄISCHE PATENTSCHRIFT

(11) **EP 2 747 553 B1**
(45) Veröffentlichungstag und Bekanntmachung des Hinweises auf die Patenterteilung: **27.03.2019**
(21) Anmeldenummer: 12748707.2
(22) Anmeldetag: 23.08.2012
(51) Int. Cl.: B05B 12/02, A01M 7/00, A01M 21/04, B05B 9/08

(54) **VERFAHREN ZUM AUSSTOSSEN EINES PFLANZENSCHUTZMITTELS**
METHOD FOR SPRAYING A PLANT PROTECTION AGENT
PROCÉDÉ DE PULVÉRISATION D'UN PRODUIT PHYTOSANITAIRE

(30) Priorität: 26.08.2011 EP 11179034; 26.08.2011 US 201161527628 P
(43) Veröffentlichungstag der Anmeldung: 02.07.2014
(73) Patentinhaber: BASF SE, 67056 Ludwigshafen am Rhein (DE)
(72) Erfinder: TARANTA, Claude, 76297 Stutensee (DE); WELTER, Peter, 68163 Mannheim (DE); NIESAR, Gunter, 67141 Neuhofen (DE); NOLTE, Marc, 68165 Mannheim (DE); ZARCO MONTERO, Antonio, 41710 Utrera (Sevilla) (ES); TORRES MORATO, José Antonio, 41530 Moron de la Frontera (Sevilla) (ES); HENKES, Steffen, 67459 Böhl-Iggelheim (DE)
(86) Internationale Anmeldenummer: PCT/EP2012/066385
(87) Internationale Veröffentlichungsnummer: WO 2013/030071

(56) Entgegenhaltungen:
- EP-A1- 2 165 770
- US-A1- 2011 203 162
- US-A1- 2011 203 500

## Beschreibung

Die vorliegende Erfindung betrifft ein Verfahren zum Ausstoßen eines Pflanzenschutzmittels. Bei dem Verfahren wird das Pflanzenschutzmittel in eine Fluidkammer gefüllt. Anschließend wird ein Druck auf das in der Fluidkammer befindliche Pflanzenschutzmittel ausgeübt und das Pflanzenschutzmittel wird über eine Spritzöffnung ausgestoßen.

Es ist bekannt, Flüssigkeiten mittels einer sogenannten Sprühflasche auszustoßen. Dabei wirkt ein Pumpmechanismus direkt auf die Flüssigkeit, die durch eine Düse ausgestoßen wird. Des Weiteren ist es bei Spritzvorrichtungen bekannt, in einer Kammer, welche das auszustoßende Wasser aufnimmt, den Luftdruck mittels eines Pumpmechanismus zu erhöhen. Wenn dann ein Auslöser betätigt wird, wird das in der Kammer befindliche Wasser aufgrund der Druckluft in der Kammer nach außen durch eine Düse herausgespritzt.

Aus der EP 0 462 749 B1 ist eine Sprühpistole bekannt, die mittels eines Handhebels betätigt wird. Die Sprühpistole weist einen Anschluss für eine Flüssigkeitsversorgung auf, über welchen unter Druck stehende Flüssigkeiten der Sprühpistole zugeführt werden. Am Auslassende der Sprühpistole ist eine Auslassdüse vorgesehen, um Flüssigkeit in einem bestimmten Sprühmuster auszustoßen. Zwischen dem Anschluss für die Flüssigkeitsversorgung und der Auslassdüse ist ein Steuerventil vorgesehen, welches mittels eines Auslösers geöffnet werden kann.

Die EP 1 136 135 B1 beschreibt einen Fluid-Pumpenspender mit einem Kolbenmechanismus. Bei diesem Pumpenspender wird die Ausbildung von Tröpfchen oder Tropfen des Erzeugnisses an der Auslassöffnung dadurch vermieden, dass das Erzeugnis in die Pumpenkammer beim Beginn jedes Kolbenrückhubs eingezogen wird.

In der DE 196 12 524 A1 wird eine Spritzpistole beschrieben, die insbesondere zum Ausstoßen mittel- bis dickviskoser Flüssigkeiten, wie zum Beispiel pastösen Klebemitteln, ausgebildet ist. Der zu applizierende Stoff wird insbesondere flächenmäßig auf ein Flächengebilde aufgetragen. Die Spritzpistole weist einen Stoffzufuhr- und einen Stoffaustrittsstutzen auf. Dazwischen ist eine Kolbenkammer angeordnet, in der ein Kolben hin- und herbewegt werden kann. Der Kolben ist mit einem Schalthebel gekoppelt. Durch Betätigung des Schalthebels kann der Durchfluss durch die Kolbenkammer durch Bewegung des Kolbens verschlossen und geöffnet werden. Bei dem Schalthebel ist ein als induktiver Näherungsschalter ausgebildeter Sensorschalter vorgesehen, der bei der Annäherung des Schalthebels bei einem vorgegebenen Näherungszustand den Stofftransport abschaltet. Dabei wird der Treibdruck des Stofftransportes noch abgebaut, ehe der Stofftransportverschluss erfolgt. Auf diese Weise soll ein Nachfließen von Material verhindert werden.

Des Weiteren sind Spritzpistolen bekannt, bei denen mit Hilfe eines Druckunterschieds eine Flüssigkeit zu kleinen Tropfen zerstäubt wird. Beispielsweise kann der auszustoßende Stoff mit Hilfe eines Venturi-Rohres aus einem Behälter gesaugt und dann zerstäubt werden. Derartige Spritzpistolen werden beispielsweise zum Versprühen von Farbe verwendet. In diesem Fall ist es auch bekannt, die Farbe mittels einer Pumpe unter Druck zu setzen und so durch eine Düse zu pressen, dass die Farbe fein zerstäubt wird.

Aus der US 5,441,180 ist schließlich eine Spritzpistole bekannt, die insbesondere zum Ausstoßen von Pflanzenschutzmitteln ausgebildet ist. Diese Spritzpistole umfasst ein Reservoir für das auszustoßende Pflanzenschutzmittel. Des Weiteren umfasst die Spritzpistole einen schwenkbaren Auslöser, durch welchen ein Kolben bewegbar ist. Durch die Bewegung des Kolbens wird das Volumen in einer Kammer, in welcher sich das auszustoßende Pflanzenschutzmittel befindet, verkleinert, sodass das Pflanzenschutzmittel ausgestoßen wird. Wenn der Auslöser wieder zurückgeschwenkt wird, wird der Kolben in entgegengesetzter Richtung bewegt, sodass sich das Volumen der Kammer vergrößert. Hierdurch wird ein Unterdruck erzeugt, welcher das Pflanzenschutzmittel aus der Ausstoßöffnung zurücksaugt.

Pflanzenschutzmittel werden üblicherweise in Form flüssiger Wirkstoffaufbereitungen angewendet. Diese werden in der Regel durch Verdünnen von im Handel üblichen Wirkstoffkonzentraten, wie beispielsweise Suspensionskonzentrate (SC), Öldispersionen (OD), Kapseldispersionen (CS), emulgierbare Konzentrate (EC), dispergierbare Konzentrate (DC), Emulsionen (EW, EO), Suspoemulsionskonzentrate (SE), Lösungskonzentrate (SL), Wasser-dispergierbare und wasserlösliche Pulver (WP und SP), wasserlösliche und Wasser-dispergierbare Granulate (WG, SG) mit bzw. in Wasser bereitgestellt. Daneben finden auch Produkte in Form von Wirkstofflösungen Verwendung, die den Wirkstoff in einer für die Anwendung geeigneten Konzentration enthalten, sogenannte ULV's. Weiterhin werden zur Bekämpfung arthropoder Schädlinge häufig wirkstoffhaltige Gele eingesetzt, die gegebenenfalls vor ihrer Anwendung mit Wasser auf die gewünschte Anwendungskonzentration verdünnt werden. Hier und im Folgenden wird daher der Begriff "Pflanzenschutzmittel" sowohl für flüssige Wirkstoffformulierungen, einschließlich wirkstoffhaltiger Gelformulierungen, mit einer für die Anwendung geeigneten Wirkstoffkonzentration als auch für flüssige Wirkstoffaufbereitungen, einschließlich verdünnter Gelformulierungen, verwendet, die durch Verdünnen von Wirkstoffkonzentraten erhältlich sind.

Beim Ausstoßen bzw. Versprühen von Pflanzenschutzmitteln mittels einer Spritzpistole ist es besonders wichtig, dass sich die Spritzpistole sicher und einfach handhaben lässt. Die Spritzpistole sollte für den mobilen Einsatz geeignet sein, d.h. sie sollte sich von einer Person leicht tragen lassen. Des Weiteren ist es von besonderer Bedeutung, dass sich das ausgestoßene Fluid, d.h. das Pflanzenschutzmittel, sehr exakt dosieren lässt. Schließlich sollte sich das Pflanzenschutzmittel mittels der Spritzpistole aus einer bestimmten Entfernung genau auf eine gewünschte Fläche auftragen lassen. Dabei sollte gewährleistet sein, dass bei dem Ausstoßvorgang kein Pflanzenschutzmittel in Bereiche gelangen kann, die nicht in Kontakt mit dem Pflanzenschutzmittel kommen sollen. Insbesondere sollte sichergestellt sein, dass es nicht passieren kann, dass der Nutzer in Kontakt mit dem Pflanzenschutzmittel kommt. Außerdem sollte ein Nachtropfen am Ende des Ausstoßvorgangs vermieden werden. Die Spritzpistole sollte insbesondere auch zur Applikation wirkstoffhaltiger Gele, beispielsweise wirkstoffhaltige Gele zur Bekämpfung arthropoder Schädlinge, geeignet sein und eine gezielte Applikation, beispielsweise in Form von Spots oder Bändern/Strängen erlauben. Die Spitzpistole sollte zudem unempfindlich gegenüber Inhomogenitäten des flüssigen Pflanzenschutzmittels sein, wie sie beispielsweise beim Bereitstellen der zur Anwendung eingesetzten Wirkstoffaufbereitung beim Verdünnen der im Handel erhältlichen Wirkstoffkonzentrate mit bzw. in Wasser auf die für die Anwendung gewünschte Konzentration auftreten können.

Aus der US 2011/203162 A1 ist ein Verfahren zur Bodenbehandlung bekannt. Mittels des Verfahrens sollen insbesondere Pestizide in die Erde eingebracht werden. Hierfür wird ein Hochdruckinjektionssystem beschrieben. Das System umfasst eine tragbare Vorrichtung und einen Vorratsbehälter für das Pestizid. Die tragbare Vorrichtung weist einen Griff und im unteren Bereich eine Injektionseinrichtung auf. Diese umfasst mehrere Hochdruckdüsen, die bei einer Platte angeordnet sind, welche auf den Boden gedrückt wird. Die Hochdruckdüsen sind über einen Verteiler miteinander verbunden. Das Pestizid wird der tragbaren Vorrichtung über eine Leitung zugeführt. Diese Leitung ist mit einem Ventil verbunden, über welches das Pestizid zu den Hochdruckdüsen gelangt. Das Ventil wird geöffnet, indem der Nutzer einen Auslöser betätigt. Von dem Auslöser wird ein elektrisches Steuersignal an das Ventil übertragen, welches daraufhin öffnet, so dass über die Düsen Pestizid in den Boden eingebracht wird.

Ferner ist aus der US 2011/0203500 A1 eine Vorrichtung zur Bodenbehandlung bekannt, die einen Kontaktkopf zum Aufsetzen auf den Boden aufweist. Der Kontaktkopf hat eine Ausstoßöffnung, ein Ausstoßventil, das in Fluidverbindung mit der Ausstoßöffnung ist, und eine Quelle, mit der ein unter Druck stehendes Bodenbehandlungsfluid bereitgestellt werden kann. Für dieses Fluid ist ein Reservoir vorgesehen, welches über eine Leitung mit einem Drucktank gekoppelt ist.

Der vorliegenden Erfindung liegt die Aufgabe zugrunde, ein Verfahren der eingangs genannten Art bereitzustellen, mit dem eine sehr exakte Dosierung des ausgestoßenen Fluids erreicht werden kann. Ferner soll ein Austritt des Fluids nach Abschluss des Ausstoßvorgangs, d.h. ein Nachtropfen von Fluid, verhindert werden.

Erfindungsgemäß wird diese Aufgabe durch ein Verfahren mit den Merkmalen des Anspruchs 1 gelöst. Vorteilhafte Ausgestaltungen und Weiterbildungen ergeben sich aus den abhängigen Ansprüchen.

Bei dem erfindungsgemäßen Verfahren gemäß Anspruch 1 wird das Pflanzenschutzmittel mittels einer Fluidkammer, die über ein elektrisch ansteuerbares Fluidventil mit der Spritzöffnung kommuniziert, ausgestoßen, wobei die Spritzöffnung von einer Spritzdüse umfasst ist, wobei der Abstand zwischen dem Fluidventil und der Spritzöffnung geringer als 50 cm ist. Bei dem Verfahren werden ein Druck und eine Dauer eines Zeitintervalls zum Ausstoßen des Pflanzenschutzmittels festgelegt. Anschließend wird das Pflanzenschutzmittel in die Fluidkammer gefüllt, wobei das Pflanzenschutzmittel ein gelartiges Fluid ist, das bei 25°C eine dynamische Viskosität bestimmt durch Rotationsviskosimetrie nach Brookfield und einem Schergefälle von 100 s⁻¹ besitzt, die im Bereich von 30 bis 1000 mPa.s liegt. Der vorab festgelegte Druck wird auf das in der Fluidkammer befindliche Pflanzenschutzmittel ausgeübt. Schließlich wird das Fluidventil mittels eines elektrischen Steuersignals für das vorab festgelegte Zeitintervall geöffnet und nach Ablauf des Zeitintervalls geschlossen, sodass ein definiertes Volumen oder ein definiertes Gewicht des Pflanzenschutzmittels durch die Spritzdüse als Strahl ausgestoßen wird. Durch die elektrische Ansteuerung des Fluidventils ist es möglich die Ausstoßdauer sehr genau zu steuern. Hierdurch erreicht man, dass die Menge des Pfanzenschutzmittels, das bei einem Ausstoßvorgang ausgestoßen wird, sehr exakt dosiert werden kann.

Bei dem erfindungsgemäßen Verfahren wird insbesondere der auf das in der Fluidkammer befindliche Pflanzenschutzmittel ausgeübte Druck während des Zeitintervalls, in dem das Fluidventil geöffnet ist, konstant gehalten. Da die ausgestoßene Menge des Pflanzenschutzmittels nicht nur von der Dauer des Öffnens des Fluidventils abhängt, sondern auch von dem Druck abhängt, welcher auf das Pflanzenschutzmittel ausgeübt wird, kann die ausgestoßene Menge auf einfache Weise exakt festgelegt werden. Es ist nämlich nicht erforderlich, ein variables Druckprofil während des Ausstoßvorgangs zu berücksichtigen.

Gemäß einer Ausgestaltung des erfindungsgemäßen Verfahrens wird der auf das in der Fluidkammer befindliche Pflanzenschutzmittel ausgeübte Druck mittels eines unter Druck stehenden Gases oder einer Pumpe erzeugt. Das unter Druck stehende Gas kann beispielsweise von einer Gasflasche bereitgestellt werden, welche eine große Menge unter hohem Druck stehenden Gases, z.B. Luft, enthält. Außerdem kann das unter Druck stehende Gas von einem Kompressor erzeugt werden. Hierdurch lässt sich auf einfache und kostengünstige Weise ein konstanter Druck für den Ausstoßvorgang bereitstellen.

Gemäß einer Ausgestaltung des erfindungsgemäßen Verfahrens ist der Abstand zwischen dem Fluidventil und der Spritzöffnung geringer als 10 cm und vorteilhafterweise geringer als 2 cm. Ferner ist das zwischen der Spritzöffnung und dem Fluidventil befindliche Fluidvolumen gemäß einer Ausgestaltung des erfindungsgemäßen Verfahrens geringer als 14 cm³, bevorzugt geringer als 2,8 cm³, weiter bevorzugt geringer als 1,4 cm³ und insbesondere geringer als 0,57 cm³. Besonders bevorzugt ist das Fluidventil direkt bei der Spritzöffnung angeordnet ist.

Bei dem erfindungsgemäßen Verfahren wird insbesondere ein Pflanzenschutzmittel in Form eines Fluids (Flüssigkeit) ausgestoßen und hierdurch appliziert. Zur Applikation geeignete Fluide weisen in der Regel eine dynamische Viskosität im Bereich von 0,5 bis 1000 mPa.s, häufig 0,8 bis 500 mPa.s (bestimmt durch Rotationsviskosimetrie nach Brookfield gemäß DIN 53019 (ISO 3219) bei 25°C und einem Schergefälle von 100 s⁻¹) auf. Geeignete Fluide können Newtonsche Flüssigkeiten oder Nicht-Newtonsche Flüssigkeit sein, wobei letztere vorzugsweise scherverdünnende, d.h. viskoelastische oder pseudoplastische Nicht-Newtonsche Fluide sind.

Gemäß einer Ausführungsform des erfindungsgemäßen Verfahrens werden Fluide mit niedriger Viskosität ausgestoßen, d.h. insbesondere Flüssigkeiten mit einer Viskosität von nicht mehr als 50 mPa.s, insbesondere nicht mehr als 30 mPa.s, z.B. 0,5 bis 50 mPa.s, insbesondere 0,8 bis 20 mPa.s (bestimmt durch Rotationsviskosimetrie nach Brookfield gemäß DIN 53019 (ISO 3219) bei 25°C und einem Schergefälle von 100 s⁻¹). Hierzu zählen sowohl organische Flüssigkeiten, insbesondere Lösungen Pflanzenschutzwirkstoffen, in organischen Lösungsmitteln wie auch wässrige Flüssigkeiten, beispielsweise wässrige Wirkstofflösungen aber auch Emulsionen, Suspoemulsionen und Suspensionen, worin der Pflanzenschutzwirkstoff in einer kohärenten wässrigen Phase in dispergierter Form vorliegt.

Gemäß einer weiteren Ausbildung des erfindungsgemäßen Verfahrens ist das ausgestoßene Pflanzenschutzmittel ein gelartiges Fluid. Gelartige Fluide weisen im Unterschied zu den Fluiden mit niedriger Viskosität eine erhöhte Viskosität auf. Derartige gelartige Fluide sind in der Regel viskoelastisch und weisen in der Regel bei 25°C eine Nullscherviskosität η0 von wenigstens 100 mPa.s und insbesondere wenigstens 200 mPa.s auf. Die dynamische Viskosität des gelartigen Fluids wird in der Regel jedoch einen Wert von 1000 mPa.S, insbesondere 500 mPa.S und speziell 300 mPa.s (bestimmt durch Rotationsviskosimetrie nach Brookfield gemäß DIN 53019 (ISO 3219) bei 25°C und einem Schergefälle von 100 s-¹) nicht überschreiten und liegt insbesondere im Bereich von 30 bis 1000 mPa.s, häufig im Bereich von 30 bis 800 mPa.s und insbesondere im Bereich von 50 bis 500 mPa.s. Vorzugsweise beträgt bei 25°C der Grenzwert der Viskosität bei einem unendlichen Schergefälle η_{∞} nicht mehr als 300 mPa.s und insbesondere nicht mehr als 250 mPa.s. Die gelartige Flüssigkeit kann eine Gelformulierung sein, welche den Wirkstoff in der für die Anwendung erforderlichen Konzentration enthält. Sie ist insbesondere eine Flüssigkeit, die durch Verdünnen einer Gelformulierung auf die für die Anwendung erforderliche Konzentration erhalten wird.

Die rheologischen Eigenschaften des Fluids bzw. der Formulierung des Fluids sind insbesondere so gewählt, dass sie temperaturunabhängig oder zumindest kaum temperaturabhängig sind. Bevorzugt ändern sich die rheologischen Eigenschaften des Fluids bzw. der Formulierung des Fluids in einem Temperaturbereich von 15 °C bis 35 °C nur so, dass die Ausstoßmenge je Zeiteinheit bei gegebenem Druck bei einer bestimmten Düse bzw. Spritzöffnung nur in einem Bereich von +/- 10%, insbesondere in einem Bereich von +/- 5%, schwankt.

Gemäß einer Weiterbildung des erfindungsgemäßen Verfahrens wird die Dauer des Zeitintervalls durch eine vorab durchgeführte Kalibrierung festgelegt. Bei der Kalibrierung wird die Abhängigkeit des ausgestoßenen Volumens oder Gewichts eines Pflanzenschutzmittels einer bestimmten Viskosität von dem ausgeübten Druck und der Dauer des Zeitintervalls ermittelt. Auf diese Weise können für ein bestimmtes Pflanzenschutzmittel vorab sehr genau die Parameter für den Ausstoßvorgang festgelegt werden. Es wird vor dem Öffnen des Fluidventils ein definierter Druck erzeugt, welcher bei der vorab durchgeführten Kalibrierung festgelegt wurde. Wenn nun ein Pflanzenschutzmittel in die Fluidkammer eingefüllt wird, dessen Viskosität bekannt ist, kann aus der vorab durchgeführten Kalibrierung sehr exakt die Dauer des Zeitintervalls ermittelt werden, um ein gewünschtes Volumen oder Gewicht des Pflanzenschutzmittels auszustoßen. Für dieses vorab festgelegte Zeitintervall wird dann bei dem erfindungsgemäßen Verfahren das Fluidventil geöffnet und das Pflanzenschutzmittel durch die Spritzöffnung ausgestoßen. Auf diese Weise erreicht man eine sehr exakte Dosierung des ausgestoßenen Volumens oder Gewichts des Pflanzenschutzmittels.

Eine Spritzpistole, mit der das erfindungsgemäße Verfahren ausführbar ist, umfasst eine Fluidkammer und eine Spritzöffnung, die mit der Fluidkammer kommuniziert. Ferner weist die Spritzpistole eine Druckeinrichtung auf, die mit der Fluidkammer gekoppelt ist und mittels derer ein Druck auf das in der Fluidkammer befindliche Fluid ausübbar ist. Bei der Spritzöffnung ist ein elektrisch ansteuerbares Fluidventil zum Öffnen und Schließen des Durchgangs von der Fluidkammer zu der Spritzöffnung angeordnet. Das Fluidventil ist datentechnisch mit einer elektrischen Steuervorrichtung gekoppelt, mit welcher ein elektrisches Steuersignal zum Öffnen des Fluidventils für ein bestimmtes vorab definiertes Zeitintervall und zum Schließen des Fluidventils nach Ablauf des Zeitintervalls erzeugbar ist, sodass ein definiertes Volumen oder ein definiertes Gewicht des Fluids über die Spritzöffnung ausgestoßen wird.

Mittels der Spritzpistole kann insbesondere das ausgestoßene Fluidvolumen oder das ausgestoßene Fluidgewicht sehr genau festgelegt werden.

Unter einer Spritzpistole wird im Sinne der Erfindung ein Gerät verstanden, mit dem ein Fluid durch eine Öffnung ausgestoßen, ausgespritzt, ausgesprüht oder vernebelt werden kann. Durch die Spritzpistole kann beim Austritt jedoch insbesondere ein Fluidstrahl erzeugt werden.

Gemäß einer Ausgestaltung der Spritzpistole umfasst die Steuervorrichtung einen Speicher zum Speichern eines vorab festgelegten Drucks und einer vorab festgelegten Dauer des Zeitintervalls. Beim Spritzvorgang steuert die Steuervorrichtung dann das Fluidventil und die Druckeinrichtung so an, dass der vorab gespeicherte Druck während des Spritzvorgangs auf das Fluid ausgeübt wird und das Fluidventil exakt für die gespeicherte Dauer des Zeitintervalls geöffnet wird.

Gemäß einer anderen Ausgestaltung der Spritzpistole wird der vorab festgelegte Druck nicht gespeichert. Vielmehr ist ein verstellbares Druckventil vorgesehen, das fest eingestellt wird, damit es dafür sorgt, dass immer ein bestimmter Druck auf das Pflanzenschutzmittel in der Fluidkammer ausgeübt wird.

Gemäß einer Ausgestaltung der Spritzpistole umfasst die Druckeinrichtung eine Pumpe, mittels welcher der Druck auf das in der Fluidkammer befindliche Fluid ausübbar ist. Diese Ausgestaltung hat den Vorteil, dass sie einen sehr einfachen Aufbau der Spritzpistole ermöglicht.

Gemäß einer anderen Ausgestaltung der Spritzpistole umfasst die Druckeinrichtung zumindest einen Zylinder, in dem ein Kolben zum Ausüben des Druckes auf das in der Fluidkammer befindliche Fluid bewegbar gelagert ist. Auf diese Weise wird ein in der Fluidkammer befindliches Fluid durch die Bewegung des Kolbens in dem Zylinder aus diesem herausgedrückt. Bei solchen Kolbendosier- bzw. Kolbenpumpvorrichtungen ergibt sich vielfach das Problem, dass am Ende eines Ausstoßvorgangs, bei dem sich kaum mehr Fluid in der Fluidkammer befindet, der Druck, durch welchen das Fluid ausgestoßen wird, abfällt. Dieser Druckabfall führt dazu, dass der ausgestoßene Fluidstrahl abreißt. Die zuletzt ausgestoßene Fluidmenge besitzt nicht mehr die gleiche Ausstoßgeschwindigkeit wie zuvor ausgestoßene Fluidvolumina, sodass das am Ende ausgestoßene Fluid nicht mehr wie die vorherigen Fluidvolumina am Ziel ankommt. Dies führt dazu, dass ein Teil des ausgestoßenen Fluidstrahls auf einen Bereich zwischen der Zielfläche und der Spritzpistole gelangt. Dies ist insbesondere dann nachteilig, wenn mit der Spritzpistole Pflanzenschutzmittel ausgestoßen werden.

Bei der Spritzpistole kann dieser Abfall der Geschwindigkeit am Ende eines Fluidausstoßes z.B. dadurch verhindert werden, dass bei dem Zylinder ein Sensor vorgesehen ist, mit welchem eine definierte Position des Kolbens, bei der sich beim Ausstoßvorgang noch ausreichend Fluid in der Fluidkammer befindet, erfassbar ist. Der Sensor gewährleistet, dass die Ausstoßvorgänge mit einer Befüllung der Fluidkammer so durchgeführt werden können, dass auch beim letzten Ausstoßvorgang noch der maximale Druck von dem Kolben auf das Restfluid in der Fluidkammer ausgeübt wird. Auch die zuletzt ausgestoßene Fluidmenge besitzt daher noch dieselbe Ausstoßgeschwindigkeit wie die zuvor ausgestoßenen Fluidvolumina. Auf diese Weise kann ein zusammenhängender Fluidstrahl erzeugt werden, bei dem das gesamte ausgestoßene Fluid im Wesentlichen dieselbe Geschwindigkeit hat, sodass die gesamte beim letzten Ausstoßvorgang ausgestoßene Fluidmenge die gewünschte Zielfläche erreicht. Es tritt insbesondere kein Abfall der Ausstoßgeschwindigkeit am Ende dieses Ausstoßvorgangs auf, sodass sichergestellt wird, dass keine Bereiche zwischen dem Ziel des Ausstoßvorgangs und der Spritzöffnung der Spritzpistole in Kontakt mit dem ausgestoßenen Fluid kommen. Dies ist insbesondere dann von Vorteil, wenn es sich bei dem ausgestoßenen Fluid um ein Pflanzenschutzmittel, insbesondere ein flüssiges, insbesondere gelartiges, hochviskoses Pflanzenschutzmittel, handelt.

Die definierte Position des Kolbens wird insbesondere so gewählt, dass sich noch soviel Fluid in der Fluidkammer befindet, dass es zu keinem Druckabfall bei der Spritzöffnung am Ende des letzten Ausstoßvorgangs kommen wird. Der Kolben hat insbesondere bei dieser Position noch nicht seine Endposition in dem Zylinder erreicht, bei welcher er an einer Zylinderwand anstößt.

Bei einer Ausgestaltung der Spritzpistole wird die definierte Position des Kolbens vom Sensor durch ein vom Kolben erzeugtes oder verändertes Magnetfeld erfasst. In den Kolben kann beispielsweise ein Permanentmagnet integriert sein, der ein Magnetfeld erzeugt, dessen Feldstärke am Ort des Sensors von der Position des Kolbens abhängt. Überschreitet oder unterschreitet die Feldstärke des Magnetfelds beim Sensor einen bestimmten Grenzwert, verändert sich der Zustand des Sensors. Der Grenzwert für die Feldstärke des Magnetfelds ist dabei so festgelegt, dass sich der Kolben in diesem Fall bei der gewünschten Position innerhalb des Zylinders befindet, bei der es zu keinem Druckabfall beim letzten Ausstoßvorgang kommen wird.

Der Sensor umfasst insbesondere einen sogenannten Reed-Kontakt. Bei einem Reed-Kontakt wird ein elektrischer Kontakt geschlossen, wenn die Feldstärke des Magnetfelds am Ort des Sensors einen Grenzwert überschreitet.

Der Sensor dieser Ausgestaltung der Spritzpistole erfasst beim Ausstoßvorgang die Position des Kolbens somit durch einen Messwert, der direkt von der Position des Kolbens in dem Zylinder abhängt. Hierdurch kann die Position des Kolbens in dem Zylinder mit hoher Genauigkeit erfasst werden. Durch eine anschließende elektronische Verarbeitung des von dem Sensor erzeugten Signals kann der letzte Ausstoßvorgang sehr exakt ermittelt werden, wodurch ein Druckabfall am Ende des letzten Ausstoßvorgangs vermieden wird.

Gemäß einer Weiterbildung der Spritzpistole umfasst die Druckeinrichtung ferner eine Druckgasleitung, die mit der Fluidkammer zum Ausüben des Druckes auf das in der Fluidkammer befindliche Fluid gekoppelt ist. Das Druckgas, welches über die Druckgasleitung zugeführt wird, kann direkt einen Druck auf das Fluid ausüben. Ferner ist es möglich, dass das Druckgas über den bewegbaren Kolben einen Druck auf das Fluid ausübt, welches sich in der Fluidkammer befindet. Hierfür kann beispielsweise in dem Zylinder eine Druckkammer gebildet sein, bei der eine Zylinderöffnung ausgebildet ist, die mit einem ersten Anschluss für eine Druckgasleitung, insbesondere eine Druckluftleitung, verbunden ist. Über die Zylinderöffnung kann somit Druckgas in die Druckkammer gelangen. Wenn der Druck in der Druckkammer den Druck in der Fluidkammer übersteigt, wird der bewegbare Kolben in Richtung der Fluidkammer gedrückt, in der sich das Fluid befindet. Es wird somit das Volumen der Druckkammer vergrößert und das Volumen der Fluidkammer verkleinert, wodurch das Fluid durch die erste Zylinderöffnung herausgedrückt wird, wenn das Fluidventil geöffnet ist. Gleichzeitig kann der Druck durch die Verbindung des ersten Anschlusses mit der Druckgasleitung in der Druckkammer konstant gehalten werden, sodass von dem Kolben während des Ausstoßvorgangs ein konstanter Druck auf das Fluid in der Fluidkammer ausgeübt wird.

Gemäß einer weiteren Ausgestaltung der Spritzpistole weist diese zusätzlich oder alternativ eine Druckfeder auf, die zwischen einem Anschlag und dem Kolben wirkt. Die Druckfeder kann auf den Kolben eine Kraft in Richtung einer Verkleinerung des Volumens der Fluidkammer ausüben. In diesem Fall ist es möglich, die Spritzpistole so auszubilden, dass keine Druckkammer gebildet ist und der Zylinder nicht mit einer Druckgasleitung verbunden ist. Der Kolbendruck wird in diesem Fall allein von der Druckfeder erzeugt. Der auf das Fluid ausgeübte Druck beim Befüllen der Fluidkammer muss dann ggf. den von der Druckfeder ausgeübten Druck übersteigen, so dass beim Befüllen der Fluidkammer mit dem Fluid die Druckfeder zusammengedrückt wird und sich das Volumen der Fluidkammer vergrößert. Des Weiteren ist es jedoch möglich, die Druckfeder zusätzlich zu der Druckkammer vorzusehen. In diesem Fall unterstützt die Druckfeder den von dem Druckgas in der Druckkammer ausgeübten Druck auf den Kolben.

Die Spritzpistole kann ferner eine Stelleinrichtung aufweisen, mit der die Bewegung des Kolbens in dem Zylinder und damit das maximale Volumen der Fluidkammer begrenzbar ist. Mittels der Stelleinrichtung kann somit das bei den Ausstoßvorgängen ausgestoßene Fluidvolumen eingestellt werden.

Gemäß einer anderen Ausgestaltung ist der Sensor in Längsrichtung des Zylinders verstellbar. In diesem Fall kann durch die Einstellung der Position des Sensors relativ zum Zylinder das ausgestoßene Fluidvolumen einer Folge von Fluidausstößen eingestellt werden.

Gemäß einer Weiterbildung der Spritzpistole weist diese einen zweiten Anschluss für ein Fluidreservoir auf. Das Fluidreservoir kann in die Spritzpistole integriert sein. Wenn das Fluidreservoir jedoch größere Fluidmengen aufnehmen soll, ist das Fluidreservoir separat von der Spritzpistole vorgesehen, sodass der Spritzpistole das Fluid über den zweiten Anschluss zugeführt wird. Dieser zweite Anschluss kann mit einer weiteren Zylinderöffnung verbunden sein, über welche der Fluidkammer Fluid zugeführt werden kann. Es ist jedoch auch möglich, dass der zweite Anschluss mit der Zylinderöffnung verbunden ist, über welche das Fluid zur Spritzöffnung gedrückt wird, so dass über den zweiten Anschluss und die Zylinderöffnung das Fluid in die Fluidkammer förderbar ist. Durch die Zylinderöffnung tritt dann somit das Fluid sowohl in die Fluidkammer des Zylinders ein als auch aus dieser Fluidkammer aus.

In diesem Fall ist es ferner möglich, das Fluidventil als erstes 3/2-Wegeventil auszuführen, bei dem in einer ersten Stellung ein Fluiddurchgang von der Zylinderöffnung zu der Spritzöffnung bereitgestellt wird und in einer zweiten Stellung ein Fluiddurchgang von dem zweiten Anschluss zu der Zylinderöffnung bereitgestellt wird.

Unter einem 3/2-Wegeventil wird ein Ventil mit drei Anschlüssen und zwei Schaltstellungen verstanden. An die drei Anschlüsse des Ventils sind das Fluidreservoir bzw. der zweite Anschluss, die Spritzöffnung und die Zylinderöffnung angeschlossen. In der ersten Stellung des Ventils wird ein Durchgang von der Zylinderöffnung zu der Spritzöffnung bereitgestellt, wobei der Durchgang von dem Fluidreservoir bzw. dem zweiten Anschluss zu der Zylinderöffnung verschlossen ist. Bei der zweiten Stellung des Ventils wird ein Fluiddurchgang von dem Fluidreservoir bzw. dem zweiten Anschluss zu der Zylinderöffnung bereitgestellt, wobei der Durchgang von der Zylinderöffnung zu der Spritzöffnung geschlossen ist. Durch das erste 3/2-Wegeventil erfolgt somit sowohl der Fluidtransport zur Spritzöffnung beim Ausstoßvorgang als auch der Fluidtransport zum Befüllen der Fluidkammer des Zylinders für das Fluid.

Des Weiteren kann bei der Spritzpistole zwischen dem ersten Anschluss, über welchen der Spritzpistole ein Druckgas zuführbar ist, und der Zylinderöffnung zum Einleiten des Druckgases ein als zweites 3/2-Wegeventil ausgebildetes Druckgasventil angeordnet sein. In der ersten Stellung dieses Druckgasventils wird ein Druckgasdurchgang von dem ersten Anschluss zu dieser Zylinderöffnung bereitgestellt. In der zweiten Stellung des Druckgasventils wird ein Druckabbau des Druckgases innerhalb der Druckkammer ermöglicht. Beispielsweise kann in der zweiten Stellung ein Druckgasdurchgang von der Zylinderöffnung ins Freie bereitgestellt werden.

Gemäß einer Weiterbildung der Spritzpistole ist das Fluidreservoir zum einen mit einer Einrichtung zum Bereitstellen von Druckgas, insbesondere Druckluft, verbunden. Die Einrichtung kann beispielsweise ein Drucklufttank, ein Kompressor und eine Handpumpe sein. Das Fluid kann aber auch direkt unter Druck gesetzt werden, z. B. durch eine Pumpe. Zum anderen ist das Fluidreservoir über eine Leitung mit dem ersten Anschluss des Druckgasventils verbunden. Es ist somit eine Verbindung von dem Druckgasventil zu dem Fluidreservoir vorgesehen. Diese Verbindung kann in die Spritzpistole integriert sein oder separat von der Spritzpistole ausgebildet sein. In der zweiten Stellung des Druckgasventils kann somit die Druckkammer mit Druckgas beaufschlagt werden. Ferner wird das Fluidreservoir mit Druckgas beaufschlagt, um einen Fluidtransport zum Befüllen der Fluidkammer des Zylinders herzustellen.

Gemäß einer Weiterbildung der Spritzpistole ist der Sensor mit dem ersten und zweiten 3/2-Wegeventil gekoppelt. Dabei schaltet der Sensor das erste und das zweite 3/2-Wegeventil in die zweite Stellung, wenn der Kolben die definierte Position erreicht oder passiert hat, sodass Fluid mittels des Druckgases vom Fluidreservoir über das erste 3/2-Wegeventil in die Fluidkammer gefördert wird. Nachdem der letzte Ausstoßvorgang beendet worden ist, wird somit über die beiden 3/2-Wegeventile automatisch die Fluidkammer des Zylinders wieder mit Fluid gefüllt. Die Schaltung der Ventile erfolgt insbesondere elektronisch. Bevorzugt werden die beiden Ventile gleichzeitig umgeschaltet, oder es wird zunächst das erste 3/2-Wegeventil für das Fluid und kurz danach das zweite 3/2-Wegeventil für das Druckgas umgeschaltet.

Gemäß einer weiteren Ausgestaltung der Spritzpistole sind die Fluidkammer und die Spritzöffnung über eine Verbindungsleitung miteinander verbunden. Das Fluidventil ist in diesem Fall in der Verbindungsleitung benachbart zu der Spritzöffnung angeordnet, es ist insbesondere direkt bei der Spritzöffnung angeordnet. Der Abstand der Spritzöffnung von dem Fluidventil ist kleiner als 50 cm, bevorzugt kleiner als 10 cm, weiter bevorzugt kleiner als 5 cm und insbesondere kleiner als 2 cm. Dabei ist das zwischen der Spritzöffnung und dem Fluidventil befindliche Fluidvolumen geringer als 14 cm³, bevorzugt geringer als 2,8 cm³, weiter bevorzugt geringer als 1,4 cm³ und insbesondere geringer als 0,57 cm³. Das Fluidventil wird somit so nah wie möglich bei der Spritzöffnung positioniert. Hierdurch ist es möglich, ein Nachtropfen auch dann zu verhindern, wenn viskose oder hochviskose Fluide mittels der Spritzpistole ausgestoßen werden. Es hat sich nämlich herausgestellt, dass in diesem Fall ein Nachtropfen durch beispielsweise ein Kugelventil, welches bei der Spritzöffnung angeordnet ist, nicht verhindert werden kann. Durch das elektronisch angesteuerte Fluidventil direkt bei der Spritzöffnung kann ein solches Nachtropfen jedoch verhindert werden.

Die Spritzpistole weist insbesondere auch einen Auslöser, beispielsweise einen manuellen Auslöser, auf. Durch diesen Auslöser wird nach dem Befüllen der Fluidkammer ein Ausstoßvorgang initiiert. Bevor jedoch die Steuervorrichtung nach dem Betätigen des Auslösers das Fluidventil zum Ausstoßen des Fluids öffnet, wird jedoch vorteilhafterweise geprüft, ob der auf das Fluid in der Fluidkammer ausgeübte Druck einem Druck entspricht, der bei einer vorab durchgeführten Kalibrierung festgelegt wurde. Für jedes mit der Spritzpistole verwendbare Fluid ist dieser Druck in dem Speicher der Steuervorrichtung gespeichert. Der aktuelle Druck innerhalb der Fluidkammer oder innerhalb der Druckkammer, über welche der Druck auf das Fluid in der Fluidkammer ausgeübt wird, wird mittels eines Drucksensors erfasst, welcher datentechnisch mit der Steuervorrichtung gekoppelt ist. Erst wenn der gemessene Druck idealerweise bei dem vorab gespeicherten Druck bzw. in einem vorab gespeicherten Druckbereich liegt, wird nach der Betätigung des Auslösers das Fluidventil für das vorab definierte Zeitintervall geöffnet. Das zu dem jeweiligen Druck gehörige Zeitintervall ist für ein Fluid einer bestimmten Viskosität auch in dem Speicher der Steuervorrichtung gespeichert.

Bei dem elektrisch ansteuerbaren Fluidventil der Spritzpistole handelt es sich um ein Ventil, welches ein elektronisches Steuersignal empfangen kann, welches das Öffnen und das Schließen des Ventils bewirkt. Zum Öffnen und Schließen des Ventils kann das Ventil beispielsweise elektromagnetisch betätigt werden. Beispielsweise kann zum Öffnen des Ventils eine bestimmte Spannung an das Ventil angelegt werden. Diese Spannung führt zu einer elektromagnetischen Betätigung des Ventils, bei welcher das Ventil in einen geöffneten Zustand versetzt wird. Liegt die Spannung nicht mehr an, wird das Ventil automatisch geschlossen. Um das Fluidventil somit für das definierte Zeitintervall zu öffnen, legt die Steuervorrichtung an das Fluidventil für dieses Zeitintervall eine Spannung an, welche das Fluidventil in einem geöffneten Zustand hält.

Auch bei dem Auslöser handelt es sich insbesondere um einen elektronischen Auslöser, bei dessen Betätigung ein Steuersignal an die Steuervorrichtung übertragen wird. Schließlich können auch die weiteren Fluidventile zum Befüllen der Fluidkammer und das Druckgasventil elektrisch angesteuert und elektromagnetisch betätigt werden. Durch die elektronische Steuerung der Ventile und den elektronischen Auslöser für die Spritzpistole ist es möglich, den mechanischen Aufbau der Spritzpistole sehr einfach zu konstruieren. Dadurch kann man eine Reduktion des Gewichts die Spritzpistole erreichen, was insbesondere bei einem mobilen Einsatz der Spritzpistole vorteilhaft ist. Durch die elektronische Steuerung der Ventile erreicht man, dass der Fluidausstoß sehr genau gesteuert werden kann, was insbesondere beim Ausstoßen von Pflanzenschutzmitteln wichtig ist.

Bei einer alternativen Ausgestaltung der Spritzpistole sind in dem Zylinder eine erste und eine zweite Fluidkammer gebildet. Bei der ersten Fluidkammer ist zumindest eine erste Zylinderöffnung gebildet. Bei der zweiten Fluidkammer ist zumindest eine zweite Zylinderöffnung gebildet. Bei dieser alternativen Ausgestaltung ist das von der ersten Fluidkammer aufgenommene Fluid dadurch herausdrückbar, dass Fluid in die zweite Fluidkammer unter Druck hereingedrückt wird, wodurch eine Kraft auf den Kolben in Richtung einer Verkleinerung der ersten Fluidkammer ausgeübt wird. Umgekehrt ist das von der zweiten Fluidkammer aufgenommene Fluid dadurch herausdrückbar, dass Fluid in die erste Fluidkammer unter Druck hereingedrückt wird, wodurch eine Kraft auf den Kolben in Richtung einer Verkleinerung der zweiten Fluidkammer ausgeübt wird. Bei dieser Ausgestaltung der Spritzpistole ist somit die mit Druckgas befüllbare Druckkammer durch eine Fluidkammer ersetzt worden. Statt durch ein Druckgas wird in diesem Fall der Druck auf den Kolben durch das in der jeweils anderen Fluidkammer befindliche Fluid ausgeübt, so dass wechselweise das Fluid aus den beiden Fluidkammern ausgestoßen wird. Diese Ausgestaltung hat den Vorteil, dass die Pausen zwischen zwei Folgen von Ausstoßvorgängen der Spritzpistole sehr viel kürzer sind, da nicht mehr abgewartet werden muss, bis die Fluidkammer wieder gefüllt ist, um mit der nächsten Folge von Fluidausstößen zu beginnen. Das Befüllen der einen Fluidkammer bewirkt nämlich, den Fluidausstoß über die andere Fluidkammer.

Gemäß einer Weiterbildung dieser Ausgestaltung der Spritzpistole sind ein erster Sensor bei der ersten Fluidkammer und ein zweiter Sensor bei der zweiten Fluidkammer vorgesehen. Mit dem Sensor ist - wie vorstehend erläutert - eine definierte Position des Kolbens, bei der sich beim Ausstoßvorgang noch Fluid in der jeweiligen Fluidkammer befindet, erfassbar. Mittels des Sensors wird das jeweilige Fluidventil geschlossen, wenn die definierte Position des Kolbens erfasst wurde.

Gemäß einer Weiterbildung dieser Ausgestaltung der Spritzpistole sind die Sensoren in Längsrichtung des Zylinders verstellbar. In diesem Fall kann durch die Einstellung der Position der Sensoren relativ zum Zylinder das ausgestoßene Fluidvolumen einer Folge von Fluidausstößen eingestellt werden.

Gemäß einer weiteren alternativen Ausgestaltung der Spritzpistole umfasst diese einen ersten und einen zweiten Zylinder. In dem ersten Zylinder ist eine erste Fluidkammer mit einer ersten Zylinderöffnung gebildet und in dem zweiten Zylinder ist eine zweite Fluidkammer mit einer zweiten Zylinderöffnung gebildet. Ferner sind in dem ersten Zylinder eine erste Druckkammer und in dem zweiten Zylinder eine zweite Druckkammer gebildet, wobei die erste und zweite Druckkammer miteinander kommunizieren und ein nicht komprimierbares Arbeitsfluid enthalten. Die erste Fluidkammer ist durch einen ersten Kolben von der ersten Druckkammer getrennt. Die zweite Fluidkammer ist durch einen zweiten Kolben von der zweiten Druckkammer getrennt, wobei sich das Volumen der ersten Fluidkammer verkleinert, wenn sich das Volumen der zweiten Fluidkammer vergrößert. Umgekehrt vergrößert sich das Volumen der ersten Fluidkammer, wenn sich das Volumen der zweiten Fluidkammer verkleinert. Gemäß dieser Ausgestaltung ist das von der ersten Fluidkammer aufgenommene Fluid dadurch herausdrückbar, dass Fluid in die zweite Fluidkammer unter Druck hereingedrückt wird, wobei eine Kraft auf den zweiten Kolben ausgeübt wird, die über das Arbeitsfluid auf den ersten Kolben übertragen wird. Umgekehrt ist das von der zweiten Fluidkammer aufgenommene Fluid dadurch herausdrückbar, dass Fluid in die erste Fluidkammer unter Druck hereingedrückt wird, wodurch eine Kraft auf den ersten Kolben ausgeübt wird, die über das Arbeitsfluid auf den zweiten Kolben übertragen wird.

Bei dieser Ausgestaltung ist das Fluidventil mit der ersten Zylinderöffnung und der zweiten Zylinderöffnung gekoppelt, wobei ein Fluiddurchgang zur Spritzöffnung nur zu jeweils einer Zylinderöffnung herstellbar ist. Ferner kann bevorzugt das Fluidventil auch vollständig gesperrt werden.

Auch bei dieser weiteren Ausgestaltung kann das Zeitintervall zwischen zwei Folgen von Ausstoßvorgängen verkürzt werden, da durch das Befüllen der einen Fluidkammer die Ausstoßvorgänge des Fluids aus der anderen Fluidkammer bewirkt wird.

Die Spritzöffnung kann so ausgebildet sein, dass das Fluid zerstäubt wird, bevorzugt wird jedoch ein Flüssigkeitsstrahl erzeugt. Hierfür ist die Spritzöffnung bevorzugt von einer Spritzdüse umfasst, die beim Durchtritt der Flüssigkeit oder wässrigen Lösung einen Flüssigkeitsstrahl erzeugt, d.h. die Flüssigkeit bzw. Lösung wird insbesondere nicht zerstäubt.

Die Spritzdüse der Spritzpistole ist insbesondere so ausgebildet, dass mit der Spritzpistole ein Pflanzenschutzmittel ausgestoßen werden kann, welches vorstehend mit Bezug zu dem erfindungsgemäßen Verfahren beschrieben wurde. Die Spritzpistole ist insbesondere für ein flüssiges Pflanzenschutzmittel ausgebildet, wobei die Spritzöffnung in diesem Fall von einer Spritzdüse umfasst ist, die beim Durchtritt des flüssigen Pflanzenschutzmittels einen Flüssigkeitsstrahl erzeugt. Ferner kann die Spritzpistole für ein gelartiges Pflanzenschutzmittel ausgebildet sein. Die Spritzdüse erzeugt in diesem Fall beim Durchtritt des gelartigen Pflanzenschutzmittels einen Strahl. Das gelartige Pflanzenschutzmittel kann somit punktförmig, d.h. in Form von Tropfen, oder linienförmig, d.h. in Form von Strängen oder Bändern appliziert werden. Beispiele für geeignete Spritzdüsen sind konische Düsen ohne Prallblech, Strahldüsen oder Lochdüsen.

Beispiele für Gelformulierungen, die mit dem erfindungsgemäßen Verfahren bzw. der Spritzpistole in ggf. verdünnter Form appliziert werden können, sind insbesondere solche Gelformulierungen, die zur Bekämpfung arthropoder Schädlinge eingesetzt werden. Derartige Gelformulierungen sind beispielsweise aus der WO 2008/031870 bekannt. Typischerweise enthalten diese Gele in der Regel wenigstens einen Wirkstoff, der gegen arthropode Schädlinge wie Insekten oder Spinnentiere (Arachnida) wirksam ist. Daneben enthalten diese Gele typischerweise Wasser, wenigstens einen Verdicker oder Gelbildner und gegebenenfalls einen oder mehrere Lockstoff und/oder Fraßstimulantien.

Die vorstehend beschriebenen Spritzpistolen eignen sich insbesondere zur Applikation von Flüssigkeiten, die einen oder mehrere Pflanzenschutzwirkstoffe in gelöster oder dispergierter, d.h. suspendierter oder emulgierter Form enthalten. Die Wirkstoffkonzentration in diesen Flüssigkeiten liegt typischerweise im Bereich von 0,001 bis 10 g/l. Die Verwendung der Spritzpistole ist diesbezüglich nicht auf bestimmte Pflanzenschutzwirkstoffe beschränkt und eignet sich zur Applikation von allen im Pflanzenschutz üblicherweise eingesetzten Wirkstoffen, die in Form flüssiger, einschließlich dünnflüssiger oder gelartiger Applikationsformen eingesetzt werden. Hierzu zählen grundsätzlich alle Pflanzenschutzwirkstoffe aus der Gruppe der Rodentizide, Herbizide, Herbizid-Safener, Fungizide, Insektizide, Akarizide, Nematizide, Molluskizide, Viruzide, Bacterizide, Algizide, Wachstumsregulatoren, Pheromone, vor allem Sexualpheromone (Mating Disruptors) und Aktivatoren sowie Düngemittel.

Die vorstehend beschriebenen Spritzpistolen können zum Ausstoßen von folgenden flüssigen Produkten verwendet werden:
- Wässrige Wirkstoffaufbereitungen von Wirkstoffen, insbesondere Pflanzenschutzwirkstoffen, die durch Verdünnen von Wirkstoffkonzentraten mit Wasser auf die gewünschte Anwendungskonzentration erhältlich sind und die einen oder mehrere der vorgenannten Pflanzenschutzwirkstoffe in gelöster oder dispergierter Form enthalten.
- Nicht-wässrige Lösungen oder Suspensionen von Wirkstoffen, insbesondere Pflanzenschutzwirkstoffen, die den Wirkstoff in einer für die Anwendung geeigneten Konzentration enthalten.
- Wässrige gelartige Flüssigkeiten, die einen oder mehrere Wirkstoffe, insbesondere Pflanzenschutzwirkstoffe, speziell aus der Gruppe der Insektizide, Akarizide oder Pheromone, enthalten und die bei geeigneter Viskosität als solche oder ggf. nach Verdünnen mit Wasser auf die gewünschte Anwendungskonzentration appliziert werden und die einen oder mehrere der vorgenannten Pflanzenschutzwirkstoffe in gelöster oder dispergierter Form, sowie Wasser, wenigstens einen Verdicker oder Gelbildner und gegebenenfalls einen oder mehrere Lockstoff und/oder Fraßstimulantien enthalten.

Die Spritzpistole kann in den verschiedensten Bereichen des Pflanzenschutzes eingesetzt werden, insbesondere zur Behandlung von Pflanzen, speziell von deren Blättern (Blattapplikation), aber auch zur Behandlung von vermehrungsfähigen Pflanzenmaterialien (Saatgut). Die Spritzpistole eignet sich auch zur Behandlung unbelebter Materialien, insbesondere unbelebter organischer Materialien wie Holz, Stroh, Papier, Leder, Textilien, Kunststoff oder unbelebter anorganischer Materialien wie Glas oder Metall, die mit schädigenden Organismen befallen sind oder vor einem Befall mit schädigenden Organismen wie Pilzen oder Insekten geschützt werden sollen, mit einer flüssigen Wirkstoffzusammensetzung, die einen oder mehrere geeignete Wirkstoffe enthalten.

Außerdem können solche Materialien als Köder aufgehängt werden und mittels der Spritzpistole mit einer geeigneten Formulierung beladen oder nachgeladen werden.

Das Pflanzenschutzmittel wird mit der Spritzpistole insbesondere nicht wie bei einer herkömmlichen Anwendung zerstäubt, sondern es wird mit einem kompakten Strahl auf die Zielfläche aufgebracht. Dabei kann die Anwendung auf einen einzelnen Punkt erfolgen (spot application) oder aus der Vorwärtsbewegung ein Band bedecken. Durch die Konsistenz des Pflanzenschutzmittels bleiben die applizierten Mengen an der Zielfläche haften. Das Pflanzenschutzmittel weist daher insbesondere eine Gelkonsistenz auf.

Die vorstehend beschriebene Spritzpistole wird insbesondere zum Ausstoßen von Pflanzenschutzmitteln verwendet, deren rheologische Eigenschaften so gewählt sind, dass sie temperaturunabhängig oder zumindest kaum temperaturabhängig sind. Bevorzugt ändern sich die rheologischen Eigenschaften des Pflanzenschutzmittels in einem Temperaturbereich von 15 °C bis 35 °C nur so, dass die Ausstoßmenge je Zeiteinheit bei gegebenem Druck bei einer bestimmten Düse bzw. Spritzöffnung nur in einem Bereich von +/-10%, insbesondere in einem Bereich von +/- 5%, schwankt.

Im Folgenden werden Ausführungsbeispiele der Spritzpistole zum Ausführen des erfindungsgemäßen Verfahrens im Bezug zu den Zeichnungen im Detail erläutert.
- Figur 1: zeigt schematisch den Aufbau eines ersten Ausführungsbeispiels der Spritzpistole sowie die Kopplung dieser Spritzpistole mit einem Fluidreservoir und einem Druckgasbehälter,
- Figur 2: zeigt schematisch den Aufbau eines zweiten Ausführungsbeispiels der Spritzpistole sowie die Kopplung dieser Spritzpistole mit einem Fluidreservoir und einem Druckgasbehälter,
- Figur 3: zeigt schematisch den Aufbau eines dritten Ausführungsbeispiels der Spritzpistole zum Ausführen des erfindungsgemäßen Verfahrens sowie die Kopplung dieser Spritzpistole mit einem Fluidreservoir,
- Figur 4: zeigt schematisch den Aufbau eines vierten Ausführungsbeispiels der Spritzpistole zum Ausführen des erfindungsgemäßen Verfahrens sowie die Kopplung dieser Spritzpistole mit einem Fluidreservoir,
- Figur 5: zeigt schematisch den Aufbau eines fünften Ausführungsbeispiels der Spritzpistole zum Ausführen des erfindungsgemäßen Verfahrens sowie die Kopplung dieser Spritzpistole mit einem Fluidreservoir,
- Figur 6: zeigt schematisch den Aufbau eines sechsten Ausführungsbeispiels der Spritzpistole zum Ausführen des erfindungsgemäßen Verfahrens sowie die Kopplung dieser Spritzpistole mit einem Fluidreservoir und
- Figur 7: zeigt ein Diagramm, welches den Zusammenhang des Fluidverlustes in Abhängigkeit von dem Mischverhältnis zwischen dem Wirkstoff und Wasser, d.h. der Viskosität des Fluids, und des Abstands zwischen der Spritzdüse und dem Fluidventil darstellt.

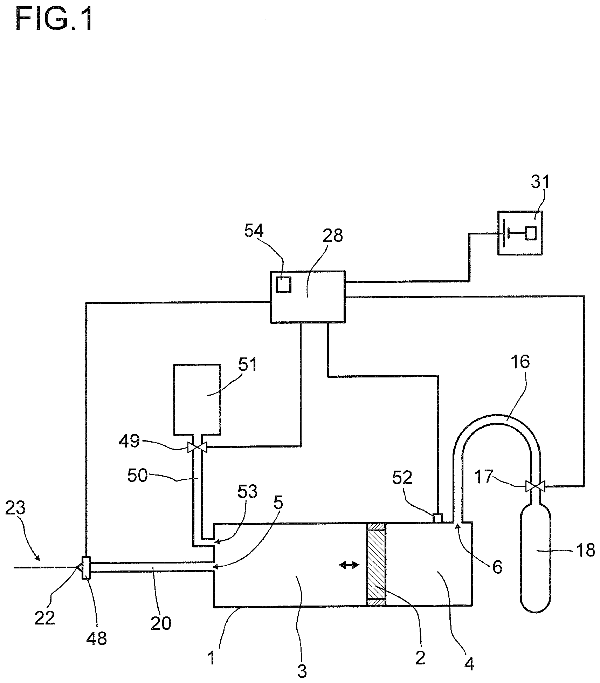

Zunächst wird das erste Ausführungsbeispiel der Spritzpistole mit Bezug zu Fig. 1 erläutert:
Die Spritzpistole umfasst einen Zylinder 1, in dem eine Fluidkammer 3 ausgebildet ist. Bei einer Stirnfläche des Zylinders 1 ist eine Zylinderöffnung 53 zum Befüllen der Fluidkammer 3 mit Fluid ausgebildet. Die Zylinderöffnung 53 ist über eine Fluidleitung 50 und ein Ventil 49 mit einem Fluidreservoir 51 verbunden. Bei dem Ventil 49 handelt es sich um ein elektrisch ansteuerbares und elektromagnetisch betätigbares Ventil, welches mit einer Steuervorrichtung 28 gekoppelt ist. Die Steuervorrichtung 28 steuert das Öffnen und Schließen des Ventils 49. Wenn das Ventil 49 mittels der Steuervorrichtung 28 geöffnet wird, strömt Fluid von dem Fluidreservoir 51 über die Leitung 50 in die Fluidkammer 3. Wenn die Fluidkammer 3 vollständig gefüllt ist, wird mittels der Steuervorrichtung 28 das Ventil 49 wieder geschlossen.

Bei der Stirnseite des Zylinders 1 weist dieser eine weitere Zylinderöffnung 5 auf, die über eine Leitung 20 mit einer Spritzdüse 22 verbunden ist. In der Spritzdüse 22 ist eine Spritzöffnung ausgebildet. Die Spritzdüse ist so beschaffen, dass ein Fluidstrahl 23 erzeugt wird, wenn ein Fluid unter Druck durch die Spritzdüse 22 gedrückt wird, für welches die Spritzpistole ausgebildet ist.

Unmittelbar vor der Spritzdüse 22, d.h. an dem Ende der Leitung 20, welches benachbart zu der Spritzdüse 22 ist, ist ein elektrisch ansteuerbares Fluidventil 48 zum Öffnen und Schließen des Durchgangs von der Fluidkammer 3 zu der Spritzöffnung der Spritzdüse 22 angeordnet. Der Abstand der Spritzöffnung der Spritzdüse 22 von dem Fluidventil 48 ist in diesem Ausführungsbeispiel kleiner als 5 cm, bevorzugt kleiner als 2 cm. Zur elektrischen Ansteuerung des Fluidventils 48 ist dieses mit der Steuervorrichtung 28 datentechnisch gekoppelt. Mittels eines Steuersignals, welches von der Steuervorrichtung 28 erzeugt wird, kann das Fluidventil 48 für ein exakt definiertes Zeitintervall geöffnet und nach Ablauf des Zeitintervalls wieder geschlossen werden.

Um auf ein in der Fluidkammer 3 befindliches Fluid einen Druck auszuüben, umfasst die Spritzpistole eine Druckeinrichtung. In dem in Figur 1 gezeigten Ausführungsbeispiel ist hierfür ein Kolben 2 bewegbar in dem Zylinder 1 gelagert. Durch den Kolben 2 wird der Zylinder 1 fluiddicht in die Fluidkammer 3 für das auszustoßende Fluid und eine Druckkammer 4 unterteilt. Bei der Druckkammer 4 ist eine weitere Zylinderöffnung 6 vorgesehen, welche über eine Leitung 16 und ein Druckgasventil 17 mit einer Einrichtung zum Bereitstellen von Druckluft, beispielsweise einer Druckluftflasche 18, verbunden ist. Bei dem Druckgasventil 17 handelt es sich auch um ein elektrisch ansteuerbares und elektromagnetisch betätigbares Ventil, welches datentechnisch mit der Steuervorrichtung 28 gekoppelt ist. Die Steuervorrichtung 28 kann über das Druckgasventil 17 den Druck in der Druckkammer 4 regeln. Hierfür ist bei der Druckkammer 4 ein Drucksensor 52 vorgesehen, der den Druck in der Druckkammer 4 erfasst und einen entsprechenden Messwert an die Steuervorrichtung 28 überträgt.

Des Weiteren ist ein elektronischer, manuell betätigbarer Auslöser 31 vorgesehen, welcher mit der Steuervorrichtung 28 gekoppelt ist. Durch Betätigen des Auslösers 31 kann der Nutzer einen Ausstoßvorgang initiieren.

Im Folgenden wird beschrieben, wie die vorstehend beschriebene Spritzpistole kalibriert wird:
Zunächst wird das Fluidventil 48 von der Steuervorrichtung 28 geschlossen. Danach wird von der Steuervorrichtung 28 das Ventil 49 geöffnet und ein bestimmtes Fluid mit bekannter Viskosität von dem Fluidreservoir 51 in die Fluidkammer 3 eingeleitet. Während dieses Vorgangs wird der Kolben 2 ggf. in Richtung einer Vergrößerung des Volumens der Fluidkammer 3 bewegt. Nachdem die Fluidkammer 3 mit einer bestimmten Menge Fluid befüllt worden ist, wird das Ventil 49 von der Steuervorrichtung 28 geschlossen. Daraufhin erzeugt die Steuervorrichtung 28 einen bestimmten Druck in der Druckkammer 4. Hierfür steuert die Steuervorrichtung 28 das Druckgasventil 17 an und überprüft den Druck in der Druckkammer 4. Ggf. kann das Druckgasventil 17 eine Auslassöffnung aufweisen, über welche Druckluft aus der Druckkammer 4 abgelassen werden kann, um den Druck in der Druckkammer 4 zu erniedrigen. Auch dieses Auslassen der Druckluft über die Auslassöffnung des Druckgasventils 17 wird von der Steuervorrichtung 28 gesteuert. Der in der Druckkammer 4 erzeugte Druck wird über den bewegbaren Kolben 2 auf das Fluid übertragen, welches sich in der Fluidkammer 3 befindet. Der Druck ist für den Ausstoßvorgang des Fluids über die Spritzdüse 22 ausreichend groß.

Anschließend wird das Fluidventil 48 für ein bestimmtes Zeitintervall mittels der Steuervorrichtung 28 geöffnet. Während dieses Zeitintervalls wird Fluid aus der Fluidkammer 3 über die Spritzdüse 22 ausgestoßen. Das ausgestoßene Fluid wird aufgefangen und das ausgestoßene Volumen und/oder das ausgestoßene Gewicht werden gemessen. Anschließend wird in einem Speicher 54 der Steuervorrichtung 28 der Druck während des Ausstoßvorgangs, die Viskosität des ausgestoßenen Fluids, die Dauer des Zeitintervalls, in dem das Fluidventil 48 geöffnet war, sowie das Volumen und/oder das Gewicht des ausgestoßenen Fluids gespeichert. Ggf. wird dieser Vorgang mit verschiedenen Drücken und Zeitintervallen wiederholt, bis für das Fluid der definierten Viskosität die gewünschten Parameter für den Ausstoßvorgang festgelegt wurden. Diese Parameter, d.h. die Viskosität des Fluids, der Druck beim Ausstoßvorgang und die Dauer des Zeitintervalls für den Ausstoßvorgang werden als Sollwerte in dem Speicher 54 der Steuervorrichtung 28 gespeichert. Die Kalibrierung kann außerdem vor jeder Ausstoßfolge vorgenommen werden. In diesem Fall ist eine Speicherung nicht nötig. Ggf. kann zusätzlich noch die Temperatur des Fluids beim Ausstoßvorgang erfasst und gespeichert werden. Die Kalibrierung kann für Fluide verschiedener Viskositäten durchgeführt werden.

Es wird somit ein Drucks und eine Dauer eines Zeitintervalls zum Ausstoßen eines Fluids, z. B. eines Pflanzenschutzmittels, einer bestimmten Viskosität vorab festgelegt.

Im Folgenden wird ein Ausführungsbeispiel des erfindungsgemäßen Verfahrens beschrieben, wie es nach der Kalibrierung mittels der mit Bezug zu Figur 1 beschriebenen Spritzpistole ausgeführt wird:
Wie bei dem Kalibrierungsvorgang wird die Fluidkammer 3 mit einem bestimmten Fluidvolumen aus dem Fluidreservoir 51 befüllt. Das Volumen in der Fluidkammer 3 reicht dabei für eine Folge von Ausstoßvorgängen aus. Anschließend wird das Ventil 49 mittels der Steuervorrichtung 28 geschlossen. Danach regelt die Steuervorrichtung 28 mittels des Drucksensors 52 und des Druckgasventils 17 den Druck der Druckluft in der Druckkammer 4 entsprechend dem Wert, welcher bei dem vorab durchgeführten Kalibrierungsvorgang ermittelt wurde.

Der Nutzer betätigt nun manuell den Auslöser 31. Der elektronische Auslöser 31 überträgt daraufhin ein entsprechendes Steuersignal an die Steuervorrichtung 28. Die Steuervorrichtung 28 prüft nun, ob der Druck in der Druckkammer 4, ggf. mit einer gewissen Toleranz, mit dem Druck übereinstimmt, welcher in dem Speicher 54 gespeichert ist und der bei der Kalibrierung festgelegt wurde. Wenn der gemessene Ist-Druck mit dem gespeicherten Soll-Druck, ggf. unter Berücksichtigung eines Toleranzbereichs, übereinstimmt, öffnet die Steuervorrichtung 28 das Fluidventil 48 exakt für ein Zeitintervall, dessen Dauer in dem Speicher 54 der Steuervorrichtung 28 gespeichert ist und die während der Kalibrierung festgelegt worden ist. Die Steuervorrichtung 28 überträgt hierfür ein entsprechendes Steuersignal an das Fluidventil 48. Beispielsweise wird an das Fluidventil 48 für die Dauer des Zeitintervalls eine Spannung angelegt. Nach Ablauf des Zeitintervalls wird das Fluidventil 48 wieder mittels der Steuervorrichtung 28 geschlossen. Beispielsweise wird die angelegte Spannung wieder auf Null gesetzt, sodass das Fluidventil 48 wieder schließt.

Während des Zeitintervalls, in dem das Fluidventil 48 geöffnet ist, wird das in der Fluidkammer 3 befindliche Fluid über die Spritzöffnung der Spritzdüse 22 in einem Fluidstrahl 23 ausgestoßen. Die Dauer des Zeitintervalls liegt beispielsweise in einem Bereich von 0,5 Sekunden bis 6 Sekunden, insbesondere in einem Bereich von 1 Sekunde bis 3 Sekunden. Während dieser Dauer regelt die Steuervorrichtung 28 den Druck in der Druckkammer 4 so, dass er konstant ist, d.h. dass ein konstanter Druck über den Kolben 2 auf das Fluid in der Fluidkammer 3 ausgeübt wird.

Bei dem erfindungsgemäßen Verfahren wird ein gelartiges Pflanzenschutzmittel ausgestoßen. Das Pflanzenschutzmittel ist viskoelastisch und weist eine dynamische Viskosität in einem Bereich von 30 bis 1000 mPa.s, häufig in einem Bereich von 30 bis 800 mPa.s und insbesondere in einem Bereich von 50 bis 500 mPa.s (bestimmt durch Rotationsviskosimetrie nach Brookfield gemäß DIN 53019 (ISO 3219) bei 25°C und einem Schergefälle von 100 Sek⁻¹ auf.

Die rheologischen Eigenschaften der Formulierung des Pflanzenschutzmittel sind so gewählt, dass sie temperaturunabhängig oder zumindest kaum temperaturabhängig sind. Die rheologischen Eigenschaften der Formulierung des Pflanzenschutzmittel ändern sich in einem Temperaturbereich von 15 °C bis 35 °C z. B. nur so, dass die Ausstoßmenge je Zeiteinheit bei gegebenem Druck bei einer bestimmten Spritzdüse 22 nur in einem Bereich von +/- 10%, insbesondere in einem Bereich von +/- 5%, schwankt.

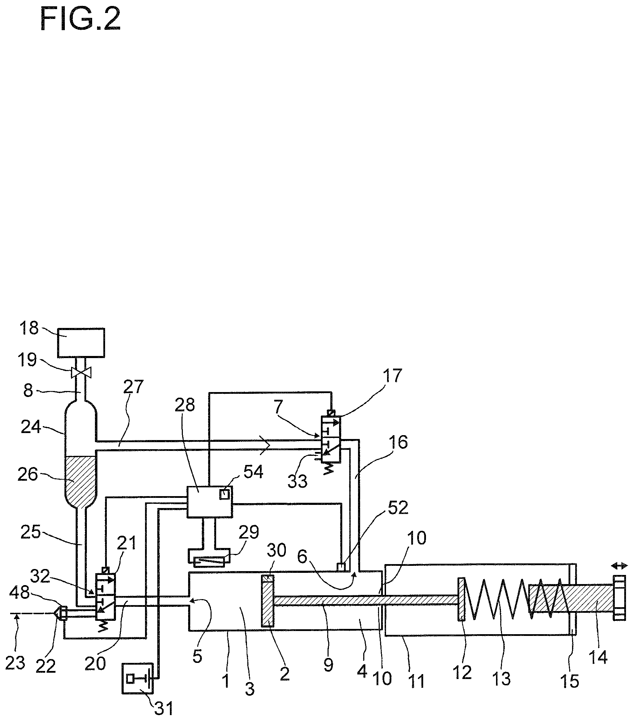

Im Folgenden wird ein zweites Ausführungsbeispiel der Spritzpistole mit Bezug zur Figur 2 erläutert:
In dem zweiten Ausführungsbeispiel werden Teile, welche die gleiche Funktion wie im ersten Ausführungsbeispiel haben, mit denselben Bezugszeichen bezeichnet. Die Funktion dieser Teile ist auch dieselbe wie im ersten Ausführungsbeispiel, so dass die Beschreibung dieser Teile im Detail nicht wiederholt wird.

Die Spritzpistole umfasst eine Kolbendosier- bzw. Kolbenpumpvorrichtung, die einen Zylinder 1 und einen Kolben 2 aufweist, der bewegbar in dem Zylinder 1 gelagert ist. Durch den Kolben 2 wird der Zylinder 1 fluiddicht in eine Fluidkammer 3 für das auszustoßende Fluid und eine Druckkammer 4 unterteilt. Bei der Fluidkammer 3 ist eine erste Zylinderöffnung 5 vorgesehen, durch welche die Fluidkammer 3 mit Fluid befüllt werden kann und durch welche außerdem Fluid beim Ausstoßvorgang aus der Fluidkammer 3 herausgedrückt wird. Bei der Druckkammer 4 ist in dem Zylinder 1 eine zweite Zylinderöffnung 6 ausgebildet, die mit einem ersten Anschluss 7 für eine Druckgasleitung 8 verbunden ist, wie es später erläutert wird.

Des Weiteren ist in dem Zylinder 1 eine Öffnung vorgesehen, durch welche der Schaft 9 des Kolbens 2 durchtritt und bei welcher dieser Schaft 9 in einem Lager 10 gasdicht gelagert ist. Die Lagerung erfolgt dabei derart, dass der Kolben 2 in Längsrichtung des Zylinders 1 hin- und herbewegt werden kann, so dass durch die Bewegung des Kolbens 2 das Volumen der Fluidkammer 3 sowie der Druckkammer 4 verändert wird. Ferner sind bei der Lagerung Dichtungen vorgesehen, so dass kein Druckgas von der Druckkammer 4 durch diese Öffnung austreten kann.

Der Teil des Schafts 9 des Kolbens 2, der durch die weitere Öffnung in dem Zylinder 1 hindurch tritt, erstreckt sich in einen weiteren Zylinder 11. Das hintere Ende des Kolbens 2 ist mit einer Platte 12 versehen, die zum einen die Position des Kolbens 2 für den Nutzer anzeigt. Hierfür ist der Zylinder 11 zumindest zum Teil durchsichtig ausgebildet. Zum anderen dient die Platte 12 der Kopplung des Kolbens 2 mit einer Druckfeder 13, welche einerseits mit der Platte 12 und andererseits mit einer Abschlusswand 15 des Zylinders 11 gekoppelt ist. Die Druckfeder 13 übt auf den Kolben 2 eine Kraft aus, die in Richtung einer Verkleinerung des Volumens der Fluidkammer 3 wirkt.

Am hinteren Ende des Zylinders 11 ist bei der Abschlusswand 15 ferner eine Stelleinrichtung vorgesehen, welche die Bewegung des Kolbens 2 in Richtung einer Vergrößerung des Volumens der Fluidkammer 3 begrenzt. Durch die Stelleinrichtung wird somit das maximale Volumen der Fluidkammer 3 eingestellt. Im vorliegenden Ausführungsbeispiel ist die Stelleinrichtung als Schraube 14 ausgebildet, die in einem Innengewinde der Abschlusswand 15 des Zylinders 11 aufgenommen ist. Durch Drehen der Schraube 14 in diesem Innengewinde kann die Länge des Anteils der Schraube 14, der sich in den Zylinder 11 hinein erstreckt, eingestellt werden. Bewegt sich der Kolben 2 beim Befüllen der Fluidkammer 3 mit Fluid, wie es später erläutert wird, in Richtung der Schraube 14, wird diese Bewegung des Kolbens 2 durch einen Anschlag der Platte 12 an die Schraube 14 begrenzt.

Um den Kolben 2 in Richtung der ersten Zylinderöffnung 5, d.h. in Fig. 2 nach links, zu drücken, wird über die zweite Zylinderöffnung 6 der Gasdruck in der Druckkammer 4 erhöht. Im vorliegenden Ausführungsbeispiel wird Druckluft über die Leitung 16 in die Druckkammer 4 eingeleitet. Die Leitung 16 ist mit einem Druckgasventil 17 verbunden, dessen Funktion später erläutert wird.

Wie beim ersten Ausführungsbeispiel ist bei der Druckkammer 4 ein Drucksensor 52 vorgesehen, welcher mit der Steuervorrichtung 28 gekoppelt ist. Der Luftdruck in der Druckkammer 4 wird soweit erhöht, bis die auf den Kolben 2 von der Druckluft sowie gegebenenfalls der Druckfeder 13 in Richtung der ersten Zylinderöffnung 5 ausgeübte Kraft die Kraft übersteigt, welcher in Gegenrichtung von dem Fluid, welches sich in der Fluidkammer 3 befindet, auf den Kolben 2 ausgeübt wird. Es wird darauf hingewiesen, dass dieser Antriebsdruck für den Kolben 2 auch nur von dem Druckgas in der Druckkammer 4, nur von der Druckfeder 13 oder sowohl von dem Druckgas in der Druckkammer 4 als auch von der Druckfeder 13 ausgeübt werden kann.

Die erste Zylinderöffnung 5 ist über eine Leitung 20 und ein Fluidventil 21 mit einer Spritzdüse 22 verbunden, welche eine Spritzöffnung bereitstellt. Durch die Spritzöffnung tritt das von der Spritzpistole ausgestoßene Fluid in einem Fluidstrahl 23 aus. Der auf das Fluid ausgeübte Druck kann beispielsweise so groß sein, dass der austretende Fluidstrahl zwei bis drei Meter weit auf eine Zielfläche geschossen werden kann. Der auf das Fluid ausgeübte Druck kann beispielsweise in einem Bereich von 2 bar bis 6 bar liegen.

Wie beim ersten Ausführungsbeispiel ist direkt bei der Spritzdüse 22 ein elektrisch ansteuerbares Fluidventil 48 angeordnet, welches mit der Steuervorrichtung 28 gekoppelt ist. Es kann durch ein Steuersignal der Steuervorrichtung 28 geöffnet und geschlossen werden.

Das auszustoßende Fluid wird wie folgt in die Fluidkammer 3 gefördert:
Für einen Fluidvorrat 26 ist ein Fluidreservoir 24 vorgesehen, das über eine Leitung 25 mit einem Anschluss 32 der Spritzpistole verbunden ist. Dieser Anschluss 32 ist mit einem Anschluss des Fluidventils 21 gekoppelt, das als 3/2-Wegeventil ausgebildet ist. Die weiteren Anschlüsse des 3/2-Wegeventils sind mit der ersten Zylinderöffnung 5 und der Spritzdüse 22 verbunden. In der ersten Stellung des Fluidventils 21 wird ein Fluiddurchgang von der ersten Zylinderöffnung 5 zu der Spritzdüse 22 bereitgestellt. In einer zweiten Stellung des Fluidventils 21 wird jedoch ein Fluiddurchgang von dem Fluidreservoir 24 über eine Leitung 25 durch das Fluidventil 21 hindurch zu der Leitung 20 und schließlich zu der ersten Zylinderöffnung 5 bereitgestellt. In der zweiten Stellung des Fluidventils 21 kann somit ein Fluid 26, welches sich in dem Fluidreservoir 24 befindet, in die Fluidkammer 3 gefördert werden. Das Fluid 26 kann dabei durch die Schwerkraft oder eine Pumpe in die Fluidkammer 3 gelangen. Bei dem vorliegenden Ausführungsbeispiel wird jedoch das Fluidreservoir 24 mit Druckluft beaufschlagt, welche das Fluid 26 in die Fluidkammer 3 drückt. Hierfür ist das Fluidreservoir 24 über eine Leitung 8 mit einer Einrichtung 18 zum Bereitstellen von Druckluft verbunden. Die Einrichtung 18 kann beispielsweise ein Drucklufttank, ein Kompressor und eine Handpumpe sein. Ferner kann in der Leitung 8 optional ein Absperrventil 19 angeordnet sein.

Das Fluidreservoir 24 ist des Weiteren über eine Leitung 27 mit dem ersten Anschluss 7 des Druckgasventils 17 verbunden, das auch als 3/2-Wegeventil ausgebildet ist. In der ersten Stellung dieses Druckgasventils 17 wird ein Druckgasdurchgang von der Druckluftleitung 8 über den ersten Anschluss 7 durch das Druckgasventil 17 und die Leitung 16 hindurch zu der zweiten Zylinderöffnung 6 in die Druckkammer 4 bereitgestellt. In der zweiten Stellung des Druckgasventils 17 ist dieser Durchgang hingegen geschlossen und ein Druckgasdurchgang wird von der Leitung 16 über einen dritten Anschluss 33 ins Freie bereitgestellt. In der zweiten Stellung kann somit der Druck in der Druckkammer 4 abgebaut werden.

Das Fluidventil 21 und das Druckgasventil 17 können elektromagnetisch betätigbar sein. Sie sind mit der Steuervorrichtung 28 verbunden, die sie betätigen kann. Dabei können die Ventile 17 und 21 - wie vorstehend beschrieben - von der ersten Stellung in die zweite Stellung umgeschaltet werden und umgekehrt. Hierfür kann die Steuervorrichtung 28 beispielsweise ein Relais oder einen Mikroprozessor umfassen.

Die Steuervorrichtung 28 ist des Weiteren mit einem Sensor 29 verbunden. Der Sensor 29 kann beispielsweise als Reed-Schalter ausgebildet sein oder einen Reed-Kontakt umfassen. Dieser Kontakt wird geschlossen, wenn die Feldstärke eines Magnetfelds bei dem Sensor 29 einen Grenzwert überschreitet. Die Steuervorrichtung 28 erfasst, ob der Reed-Kontakt des Sensors 29 geschlossen oder geöffnet ist.

Mittels des Sensors 29 kann die Position des Kolbens 2 in dem Zylinder 1 erfasst werden. Bei der Spritzpistole ist eine bestimmte Position des Kolbens 2 innerhalb des Zylinders 1 definiert, bei welcher die Ausstoßvorgänge beendet werden sollen. Genau bei dieser definierten Position des Kolbens 2 verändert der Sensor 29 seinen Zustand. Dies wird von der Steuervorrichtung 28 erfasst. Um diese Zustandsänderung des Sensors 29 herbeizuführen, ist in dem Kolben 2 ein Permanentmagnet 30 integriert. Dieser Permanentmagnet 30 erzeugt ein Magnetfeld, dessen Feldstärke am Ort des Sensors 29 von der Position des Kolbens 2 abhängt. Befindet sich der Kolben 2 bei der vorstehend erläuterten definierten Position, bewirkt das von dem Permanentmagneten 30 erzeugte Magnetfeld einen Zustandswechsel bei dem Sensor 29.

Im Folgenden wird das Befüllen der Fluidkammer 3 und der Fluidausstoß beim zweiten Ausführungsbeispiel der Spritzpistole im Detail erläutert:
Beim Befüllen der Fluidkammer 3 mit Fluid sind sowohl das Fluidventil 21 als auch das Druckgasventil 17 in der zweiten Stellung. In diesem Fall wird das Fluid 26 in dem Fluidreservoir 24 durch die Leitung 25 und durch das Fluidventil 21 über die Leitung 20 in die Fluidkammer 3 des Zylinders 1 gefördert. Der von der Druckluft ausgeübte Druck ist dabei so groß, dass der Kolben 2 in Fig. 2 nach rechts bewegt wird, und zwar gegen die Kraft, die von der Druckfeder 13 ausgeübt wird. Die Luft in der Druckkammer 4 entweicht bei der Bewegung des Kolbens 2 durch die Leitung 16, das Druckgasventil 17 und den dritten Anschluss 33 nach außen. Die Fluidkammer 3 kann mit Fluid befüllt werden, wobei sich das Volumen der Fluidkammer 3 durch die Bewegung des Kolbens 2 vergrößert, bis die Platte 12 des Kolbens 2 an die Schraube 14 anschlägt. Befindet sich der Kolben 2 bei diesem Anschlag, ist das maximal eingestellte Volumen der Fluidkammer 3 erreicht und die Fluidkammer 3 ist vollständig mit Fluid gefüllt.

Wird nun der Auslöser 31 von einem Nutzer betätigt, wird ein entsprechendes Signal an die Steuervorrichtung 28 übertragen. Die Steuervorrichtung 28 schaltet daraufhin das Druckgasventil 17 und das Fluidventil 21 in die erste Stellung. In diese Stellung ist die Fluidzufuhr von dem Fluidreservoir 24 gesperrt, der Fluiddurchgang von der Fluidkammer 3 zu dem Fluidventil 48 ist hingegen geöffnet. Außerdem wird gleichzeitig oder bevorzugt kurz vorher der Druckgasdurchgang von der Druckluftleitung 8 in die Druckkammer 4 geöffnet, so dass Druckluft in die Druckkammer 4 eingeleitet wird.

Wie beim ersten Ausführungsbeispiel regelt die Steuervorrichtung 28 nun den Druck in der Druckkammer 4 entsprechend dem bei der Kalibrierung ermittelten Wert, der in dem Speicher 54 der Steuervorrichtung 28 gespeichert ist. Stimmt der gemessene Ist-Druck mit dem gespeicherten Soll-Druck überein, öffnet die Steuervorrichtung 28 mittels eines Steuersignals das Fluidventil 48 für ein Zeitintervall, dessen Dauer in dem Speicher 54 der Steuervorrichtung 28 gespeichert ist und die vorab bei der Kalibrierung ermittelt worden ist. Nach Ablauf des Zeitintervalls wird das Fluidventil 48 wieder mittels der Steuervorrichtung 28 geschlossen. Während des Zeitintervalls wurde bei dem Ausstoßvorgang ein Fluidstrahl 23 ausgestoßen.

Auf diese Weise können nun mehrere Ausstoßvorgänge ausgeführt werden. Dabei bewegt sich der Kolben 2 in Richtung einer Verkleinerung des Volumens der Fluidkammer 3.

Erreicht der Kolben 2 nun die vorstehend erläuterte definierte Position, erzeugt der Permanentmagnet 30 bei dem Sensor 29 ein Magnetfeld einer Feldstärke, die zu einem Zustandswechsel des Sensors 29 führt. Ein solcher Zustandswechsel wird von der Steuervorrichtung 28 erfasst, woraufhin die Steuervorrichtung 28 nach Abschluss des Ausstoßvorgangs und nach dem Schließen des Fluidventils 48 das Fluidventil 21 und das Druckgasventil 17 jeweils wieder zurück in die zweite Stellung schaltet. Das Umschalten der beiden Ventile 17 und 21 kann gleichzeitig erfolgen. Ferner kann zunächst das Fluidventil 21 umgeschaltet werden und erst kurz danach das Druckgasventil 17.

Nachdem die beiden Ventile 17 und 21 in die zweite Stellung gebracht worden sind, wird - wie vorstehend erläutert - die Fluidkammer 3 wieder automatisch für die nächsten Ausstoßvorgänge mit Fluid gefüllt.

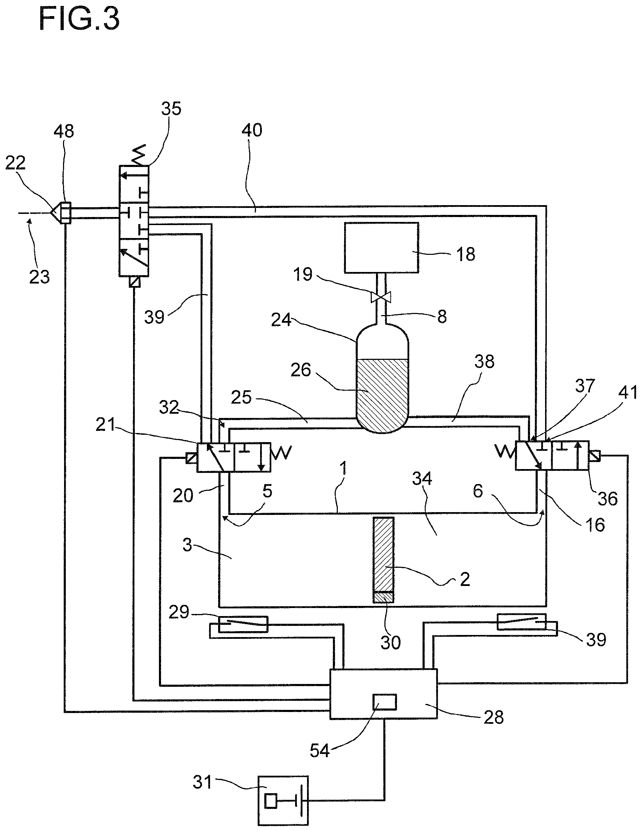

Im Folgenden wird das dritte Ausführungsbeispiel der Spritzpistole mit Bezug zu Fig. 3 erläutert:
In dem dritten Ausführungsbeispiel werden Teile, welche die gleiche Funktion wie im ersten und zweiten Ausführungsbeispiel haben, mit denselben Bezugszeichen bezeichnet. Die Funktion dieser Teile ist auch dieselbe wie im ersten bzw. zweiten Ausführungsbeispiel, so dass die Beschreibung dieser Teile im Detail nicht wiederholt wird.

Das dritte Ausführungsbeispiel der Spritzpistole unterscheidet sich vom zweiten Ausführungsbeispiel insbesondere dadurch, dass die Druckkammer 4 des zweiten Ausführungsbeispiels in eine zweite Fluidkammer 34 umgewandelt wurde. In dem Zylinder 1 ist somit eine erste Fluidkammer 3 und eine zweite Fluidkammer 34 gebildet, die durch den bewegbaren Kolben 2 voneinander getrennt sind. Des Weiteren wurde die Druckfeder 13 des zweiten Ausführungsbeispiels weggelassen.

Wie beim zweiten Ausführungsbeispiel ist die erste Fluidkammer 3 über die erste Zylinderöffnung 5 und eine Leitung 20 mit einem Fluidventil 21 verbunden, welches bei diesem dritten Ausführungsbeispiel als erstes Fluidventil 21 bezeichnet wird. Auch das erste Fluidventil 21 ist als 3/2-Wegeventil ausgebildet. Wie beim zweiten Ausführungsbeispiel ist ein Anschluss des ersten Fluidventils 21 mit der Spritzdüse 22 verbunden. Allerdings ist bei dem dritten Ausführungsbeispiel ein drittes Fluidventil 35 zwischen dem Anschluss des ersten Fluidventils 21 und der Spritzdüse 22 angeordnet, wie es später erläutert wird.

Der Anschluss 32 des ersten Fluidventils 21 ist wie beim zweiten Ausführungsbeispiel mit einem Fluidreservoir 24 verbunden, in welchem sich Fluid 26 befindet. Das Fluidreservoir 24 kann wie im zweiten Ausführungsbeispiel mittels der Druckluftleitung 8, dem Absperrventil 19 und der Einrichtung 18 zum Bereitstellen von Druckluft mit Druckluft beaufschlagt werden. Das Fluid kann jedoch bei allen Ausführungsbeispielen auch auf andere Weise unter Druck gesetzt werden, um den Kolben 2 wie später erläutert zu bewegen. Beispielsweise kann eine Pumpe verwendet werden. In diesem Fall kann noch ein Bypass vorgesehen sein, über welchen das Fluid zurück in das Reservoir gelangt, wenn der Zylinder 1 nicht gefüllt wird, weil zumindest ein Fluidventil oder mehrere Fluidventile geschlossen sind.

Anders als beim zweiten Ausführungsbeispiel ist bei dem dritten Ausführungsbeispiel die zweite Zylinderöffnung 6, welche in diesem Fall bei der zweiten Fluidkammer 34 angeordnet ist, über die Leitung 16 mit einem zweiten Fluidventil 36 verbunden. Auch dieses zweite Fluidventil ist als 3/2-Wegeventil ausgebildet. Der Anschluss 37 des zweiten Fluidventils 36 ist über eine Leitung 38 mit dem Fluidreservoir 24 verbunden. Der andere Anschluss 41 des zweiten Fluidventils 36 ist über das dritte Fluidventil 35 mit der Spritzdüse 22 verbunden.

Das dritte Fluidventil 35 ist als 3/3-Wegeventil mit Sperr-Mittelstellung ausgebildet. Es kann somit ein Durchgang von der Leitung 39 zu der Spritzdüse 22 oder von der Leitung 40 zu der Spritzdüse 22 hergestellt werden. Ferner können beide Durchgänge gesperrt werden.

Wie beim zweiten Ausführungsbeispiel ist bei der ersten Fluidkammer 3 ein als Reed-Schalter ausgebildeter Sensor 29 angeordnet, der im dritten Ausführungsbeispiel als erster Sensor 29 bezeichnet wird. Befindet sich der Permanentmagnet 30 des Kolbens 2 bei der beim zweiten Ausführungsbeispiel erläuterten definierten Position, wird von diesem Permanentmagneten 30 ein Magnetfeld erzeugt, dessen Feldstärke am Ort des ersten Sensors 29 bewirkt, dass der Reed-Kontakt geschlossen wird. Dies wird von der Steuervorrichtung 29 erfasst.

Beim dritten Ausführungsbeispiel befindet sich im Gegensatz zum zweiten Ausführungsbeispiel jedoch ein entsprechender zweiter Sensor 39 bei der zweiten Fluidkammer 34. Auch der zweite Sensor 39 umfasst einen Reed-Kontakt. Bei der Spritzpistole des dritten Ausführungsbeispiels ist eine weitere Position des Kolbens 2 definiert, bei welcher der Ausstoßvorgang beendet werden soll, nämlich in diesem Fall der Ausstoßvorgang des Fluids aus der zweiten Fluidkammer 34. Der zweite Sensor 39 ist so ausgebildet, dass der Reed-Kontakt geschlossen wird, wenn der Permanentmagnet 30 des Kolbens 2 bei einer entsprechend definierten Position ein Magnetfeld erzeugt, dessen Feldstärke am Ort des zweiten Sensors 39 den Grenzwert zum Schalten des Reed-Kontakts überschreitet. Auch dieser Zustandswechsel des zweiten Sensors 39 wird von der Steuervorrichtung 28 erfasst.

Die beiden Sensoren 29, 39 können ferner in Längsrichtung des Zylinders 1 verstellbar sein. In diesem Fall lässt sich das auszubringende Fluidvolumen dadurch anpassen, dass die Position der Sensoren 29, 39 verändert wird.

Des Weiteren weist auch die Spritzpistole des dritten Ausführungsbeispiels direkt bei der Spritzdüse 22 ein Fluidventil 48 auf, welches elektrisch von der Steuervorrichtung 28 ansteuerbar ist. Ferner ist bei den beiden Fluidkammern 3 und 34 jeweils ein (nicht gezeigter) Drucksensor angeordnet, welcher den Druck in der jeweiligen Fluidkammer 3, 34 misst und an die Steuervorrichtung 28 überträgt.

Im Folgenden wird der Spritzvorgang mit der Spritzpistole gemäß dem dritten Ausführungsbeispiel erläutert:
Vor dem eigentlichen Spritzvorgang wird der Zylinder 1 der Spritzpistole mit Fluid 26 aus dem Fluidreservoir 24 gefüllt. In diesem Ausgangszustand steuert die Steuervorrichtung 28 das dritte Fluidventil 35 zunächst so an, dass die Durchgänge in Richtung der Spritzdüse 22 gesperrt sind, das heißt, das dritte Fluidventil 35 befindet sich in der Mittelstellung. Ferner ist das Fluidventil 48 geschlossen. Daraufhin wird von der Steuervorrichtung 28 das erste Fluidventil 21 so angesteuert, dass sich ein Fluiddurchgang von dem Fluidreservoir 24 in die erste Fluidkammer 3 ergibt. Wird nun das Absperrventil 19 geöffnet, wird das Fluidreservoir 24 mit Druckluft beaufschlagt, so dass Fluid 26 über die Leitung 25 durch das erste Fluidventil 21 in die erste Fluidkammer 3 strömt. Alternativ kann auch in diesem Fall das Fluid unter Druck gesetzt werden, z. B. durch eine Pumpe. Dabei wird der Kolben 2 bei der Darstellung gemäß Figur 3 nach rechts bewegt, bis er an einen (nicht dargestellten) Anschlag anschlägt. Falls sich in diesem Fall noch Luft in der zweiten Fluidkammer 34 befindet, kann ein Auslassventil zum Verdrängen dieser Luft vorgesehen sein. Befindet sich in der zweiten Fluidkammer 34 bereits Fluid 26, wird das zweite Fluidventil 36 von der Steuervorrichtung 28 so angesteuert, dass der Fluiddurchgang zwischen der Leitung 38 und der Leitung 16 geöffnet ist, so dass das in der zweiten Fluidkammer 34 enthaltene Fluid zurück in das Reservoir 24 strömen kann.

Wenn nun von einem Nutzer der Auslöser 31 betätigt wird, schaltet die Steuervorrichtung 28 das erste Fluidventil 21 für einen Fluiddurchgang von der

Leitung 20 in die Leitung 39. Der Fluiddurchgang von der Leitung 20 in die Leitung 25 ist gesperrt. Das zweite Fluidventil 36 wird hingegen so geschaltet, dass der Fluiddurchgang von der Leitung 38 in die Leitung 16 geöffnet ist, der Fluiddurchgang von der Leitung 16 in die Leitung 40 hingegen gesperrt ist. Ferner steuert die Steuervorrichtung 28 das dritte Fluidventil 35 so an, dass der Fluiddurchgang von der Leitung 39 zum Fluidventil 48 geöffnet ist, der Fluiddurchgang von der Leitung 40 zum Fluidventil 48 hingegen gesperrt ist. Diese Schaltung der drei Fluidventile 21, 36 und 35 bewirkt, dass durch die Beaufschlagung des Fluidreservoirs 24 mit Druckluft Fluid 26 über die Leitung 38 durch das zweite Fluidventil 36 in die zweite Fluidkammer 34 strömt. Das Fluid in der zweiten Fluidkammer 34 übt eine Kraft auf den Kolben 2 aus, so dass dieser in Richtung einer Verkleinerung des Volumens der ersten Fluidkammer 3 in der Darstellung gemäß Figur 3 nach links gedrückt wird. Somit wird das in der ersten Fluidkammer 3 befindliche Fluid durch die erste Zylinderöffnung 5 über die Leitung 20, durch das erste Fluidventil 21 über die Leitung 39 und durch das dritte Fluidventil 35 zum Fluidventil 48 gedrückt.

Wenn nun wie bei den ersten beiden Ausführungsbeispielen der auf das Fluid ausgeübte Druck dem in der Steuervorrichtung 28 gespeicherten Soll-Wert entspricht, öffnet die Steuervorrichtung 28 das Fluidventil 48 für das vorab festgelegte Zeitintervall, dessen Dauer in dem Speicher 54 der Steuervorrichtung 28 gespeichert ist und das Fluid wird als Fluidstrahl 23 ausgestoßen. Ein solcher Ausstoßvorgang kann so lange wiederholt werden, bis das von dem Permanentmagneten 30 erzeugte Magnetfeld am Ort des ersten Sensors 29 eine Feldstärke übersteigt, bei welcher ein Zustandswechsel des ersten Sensor 29 herbeigeführt wird, welcher von der Steuervorrichtung 28 erfasst wird. Sobald dieser Zustandswechsel erfasst wurde, schaltet die Steuervorrichtung 28 die drei Fluidventile 21, 36 und 35 nach Abschluss des letzten Ausstoßvorgangs wie folgt um: Das erste Fluidventil 21 wird so geschaltet, dass der Durchgang von der Leitung 20 zur Leitung 39 gesperrt wird, der Durchgang von der Leitung 25 zur Leitung 20 hingegen geöffnet wird. Das zweite Fluidventil 36 wird so umgeschaltet, dass der Fluiddurchgang von der Leitung 38 in die Leitung 16 gesperrt wird, der Fluiddurchgang von der Leitung 16 in die Leitung 40 hingegen geöffnet wird. Ferner wird das dritte Fluidventil 35 so umgeschaltet, dass es in die vollständig sperrende Mittelstellung gebracht wird oder dass es direkt in eine Stellung gebracht wird, bei welcher der Fluiddurchgang von der Leitung 40 zur Spritzdüse 22 geöffnet ist, der Fluiddurchgang von der Leitung 39 zur Spritzdüse 22 hingegen gesperrt ist. Wenn die definierte Position des Kolbens 2 erfasst wurde, wird zumindest das erste Fluidventil 21 oder das dritte Fluidventil 35 für den Durchgang von der ersten Fluidkammer 3 zur Spritzdüse 22 gesperrt.

Dieses Umschalten der drei Fluidventile 21, 36, 35 bewirkt, dass nun andersherum das Fluid 26 unter Druck über die Leitung 25, durch das erste Fluidventil 21 in die erste Fluidkammer 3 strömt. Hier übt das Fluid eine Kraft auf den Kolben 2 aus, so dass dieser in Richtung einer Verkleinerung des Volumens der zweiten Fluidkammer 34 in der Darstellung gemäß Figur 3 nach rechts bewegt wird. Es wird nun die erste Fluidkammer 3 gefüllt. Durch dieses Befüllen wird jedoch das in der zweiten Fluidkammer 34 befindliche Fluid über die Leitung 16, durch das zweite Fluidventil 36, über die Leitung 40, durch das dritte Fluidventil 35 zum Fluidventil 48 gedrückt.

Nun kann erneut eine Folge von Ausstoßvorgängen des in der Fluidkammer 34 befindlichen Fluids erfolgen. Diese Ausstoßvorgänge dauern so lange, bis das von dem Permanentmagneten 30 erzeugte Magnetfeld am Ort des zweiten Sensors 39 eine Feldstärke erreicht, welche einen Zustandswechsel des zweiten Sensors 39 bewirkt. Sobald ein solcher Zustandswechsel von der Steuervorrichtung 28 erfasst wurde, werden nach Abschluss des letzten Ausstoßvorgangs die Fluidventile 21, 36 und 35 wie vorstehend erläutert wieder zurückgeschaltet, so dass anschließend die zweite Fluidkammer 34 befüllt wird.

Das Fluid wird von der Spritzpistole des dritten Ausführungsbeispiels wie bei der Spritzpistole des ersten oder zweiten Ausführungsbeispiels als Fluidstrahl 23 ausgestoßen, welcher bis zum Ende des Ausstoßvorgangs eine konstante Ausstoßgeschwindigkeit hat, so dass der Fluidstrahl 23 vollständig sein Ziel erreicht. Außerdem wird durch das Fluidventil 48 ein Nachtropfen von Fluid verhindert.

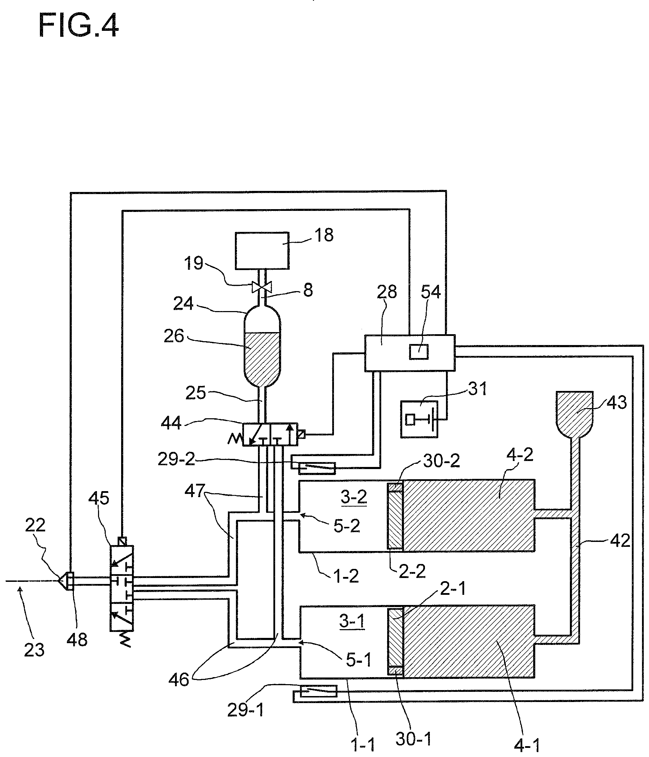

Im Folgenden wird das vierte Ausführungsbeispiel der Spritzpistole mit Bezug zu Fig. 4 erläutert:
In dem vierten Ausführungsbeispiel werden Teile, welche die gleiche Funktion wie in den vorhergehenden Ausführungsbeispielen haben, mit denselben Bezugszeichen bezeichnet. Die Funktion dieser Teile ist auch dieselbe wie in den vorhergehenden Ausführungsbeispielen, so dass die Beschreibung dieser Teile im Detail nicht wiederholt wird.

Die prinzipielle Funktionsweise der Spritzpistole des vierten Ausführungsbeispiels entspricht der Spritzpistole des dritten Ausführungsbeispiels. Allerdings ist in diesem Fall nicht ein einziger Zylinder 1 vorgesehen, welcher zwei Fluidkammern 3 und 34 enthält, die durch den Kolben 2 getrennt sind, sondern es sind zwei Zylinder 1-1 und 1-2 vorgesehen. Das Funktionsprinzip entspricht jedoch im Wesentlichen dem Funktionsprinzip der Spritzpistole des dritten Ausführungsbeispiels.

In dem ersten Zylinder 1-1 ist eine erste Fluidkammer 3-1 mit einer ersten Zylinderöffnung 5-1 gebildet. Des Weiteren ist eine erste Druckkammer 4-1 in dem ersten Zylinder 1-1 gebildet. Zwischen der ersten Fluidkammer 3-1 und der ersten Druckkammer 4-1 ist ein bewegbarer erster Kolben 2-1 angeordnet.

Entsprechend ist bei dem zweiten Zylinder 1-2 eine zweite Fluidkammer 3-2 mit einer zweiten Zylinderöffnung 5-2 gebildet. Auch bei dem zweiten Zylinder 1-2 ist eine zweite Druckkammer 4-2 gebildet, wobei ein bewegbarer zweiter Kolben 2-2 zwischen der zweiten Fluidkammer 3-2 und der zweiten Druckkammer 4-2 angeordnet ist. Die erste Druckkammer 4-1 und die zweite Druckkammer 4-2 kommunizieren über eine Leitung 42 miteinander. In der ersten und zweiten Druckkammer 4-1, 4-2 und der Leitung 42 befindet sich ein nicht komprimierbares Arbeitsfluid, wie beispielsweise Öl. Ferner kann die Leitung 42 mit einem Reservoir 43 für das Arbeitsfluid verbunden sein. Über das Reservoir 43 kann das Volumen des Arbeitsfluids in den beiden Druckkammern 4-1, 4-2 und der Leitung 42 verändert werden. Auf diese Weise kann das maximale Volumen der beiden Fluidkammern 3-1, 3-2 und damit das ausgestoßene Fluidvolumen eingestellt werden.

Alternativ oder zusätzlich können wie bei der Spritzpistole des dritten Ausführungsbeispiels die beiden Sensoren 29-1, 29-2 in Längsrichtung der Zylinder 1-1, 1-2 verstellbar sein, so dass sich das auszubringende Fluidvolumen dadurch anpassen lässt, dass die Position der Sensoren 29-1, 29-2 verändert wird.

Das Arbeitsfluid überträgt eine von dem ersten Kolben 2-1 ausgeübte Kraft auf den zweiten Kolben 2-2 und umgekehrt. Die aus dem ersten Kolben 2-1, dem Arbeitsfluid und dem zweiten Kolben 2-2 gebildete Einheit entspricht somit dem Kolben 2 der Spritzpistole des dritten Ausführungsbeispiels.

Die Spritzpistole des vierten Ausführungsbeispiels umfasst zwei Fluidventile 44 und 45. Das Fluidventil 44 wird im Folgenden auch als erstes Fluidventil 44 bezeichnet. Da das Fluidventil 45 von der Funktion dem dritten Fluidventil 35 des dritten Ausführungsbeispiels entspricht, wird dieses Fluidventil 45 im Folgenden auch als drittes Fluidventil 45 bezeichnet.

Die erste Zylinderöffnung 5-1 der ersten Fluidkammer 3-1 ist über eine Leitung 46 mit einem Anschluss des ersten Fluidventils 44 und des dritten Fluidventils 45 verbunden. Ferner ist die zweite Zylinderöffnung 5-2 der zweiten Fluidkammer 3-2 über eine Leitung 47 mit einem anderen Anschluss des ersten Fluidventils 44 und einem anderen Anschluss des dritten Fluidventils 45 verbunden. Ein weiterer Anschluss des ersten Fluidventils 44 ist über eine Leitung 25 mit dem Fluidreservoir 24 gekoppelt, in dem sich das Fluid 26 befindet. Wie bei den ersten Ausführungsbeispielen ist das Fluidreservoir 24 über eine Druckluftleitung 8 und ein optionales Absperrventil 19 mit einer Einrichtung 18 zum Bereitstellen von Druckluft gekoppelt. Es wäre jedoch auch möglich, das Fluid direkt, z. B. durch eine Pumpe unter Druck zu setzten. Das erste Fluidventil 44 wird von der Steuervorrichtung 28 angesteuert. In einem Zustand des ersten Fluidventils 44 wird ein Durchgang von der Leitung 25 zu der Leitung 46 bereitgestellt, wobei der Durchgang von der Leitung 25 zur Leitung 47 gesperrt ist. In dem anderen Zustand wird ein Durchgang von der Leitung 25 zu der Leitung 47 bereitgestellt, wobei der Durchgang von der Leitung 25 zu der Leitung 46 gesperrt ist.

Auch die Spritzpistole des vierten Ausführungsbeispiels weist direkt bei der Spritzdüse 22 ein Fluidventil 48 auf, welches elektrisch mittels der Steuervorrichtung 28 gesteuert wird. Ferner sind bei den Druckkammern 4-1 und 4-2 (nicht gezeigte) Drucksensoren vorgesehen, welche mit der Steuervorrichtung 28 gekoppelt sind.

Das dritte Fluidventil 45 wird von der Steuervorrichtung 28 angesteuert, wobei in einem Zustand ein Durchgang von der Leitung 46 zum Fluidventil 48 geöffnet ist, wohingegen der Durchgang von der Leitung 47 zum Fluidventil 48 gesperrt ist. In einem anderen Zustand ist der Durchgang von der Leitung 46 zum Fluidventil 48 gesperrt, wohingegen der Durchgang von der Leitung 47 zum Fluidventil 48 geöffnet ist. Ferner wird wie bei der Spritzpistole des dritten Ausführungsbeispiels eine Mittelstellung bereitgestellt, bei welcher beide Durchgänge zum Fluidventil 48 gesperrt sind.

Analog zu den Spritzpistolen der vorhergehenden Ausführungsbeispiele ist für den ersten Zylinder 1-1 bei der ersten Fluidkammer 3-1 ein erster Sensor 29-1 vorgesehen, welcher die Position des ersten Kolbens 2-1 aufgrund eines von einem ersten Permanentmagneten 30-1 erzeugten Magnetfelds erfasst. Gleichermaßen ist bei der zweiten Fluidkammer 3-2 des zweiten Kolbens 1-2 ein zweiter Sensor 29-2 vorgesehen, welcher die Position des zweiten Kolbens 2-2 erfasst, indem, wie beim dritten Ausführungsbeispiel erläutert, ein Zustandswechsel des zweiten Sensors 29-2 durch die Feldstärke eines Magnetfelds erfasst wird, welche von einem zweiten Permanentmagneten 30-2 erzeugt wird, welcher bei dem zweiten Kolben 2-2 angeordnet ist. Die Signale der beiden Sensoren 29-1 und 29-2 werden wie bei der Spritzpistole des dritten Ausführungsbeispiels an die Steuervorrichtung 28 übertragen, welche in Abhängigkeit von diesen Signalen die beiden Fluidventile 44 und 45 ansteuert.

Im Folgenden wird ein Spritzvorgang erläutert, der von der Spritzpistole des vierten Ausführungsbeispiels ausgeführt wird:
Der Fluidausstoß wird wie bei den vorhergehenden Ausführungsbeispielen dadurch initiiert, dass ein Nutzer den Auslöser 31 betätigt, welcher mit der Steuervorrichtung 28 verbunden ist.

Zunächst steuert die Steuervorrichtung 28 das erste Fluidventil 44 so an, das ein Fluiddurchgang von der Leitung 25 zu der Leitung 46 bereitgestellt wird, so dass die erste Fluidkammer 3-1 mit Fluid 26 gefüllt werden kann. Das dritte Fluidventil 45 befindet sich zunächst in der Mittelstellung, bei welcher die beiden Durchgänge gesperrt sind. Die erste Fluidkammer 3-1 wird mit Fluid befüllt, wodurch der Kolben 2-1 bei der Darstellung gemäß Figur 4 nach rechts bewegt wird, so dass sich das Volumen der ersten Fluidkammer 3-1 vergrößert. Gleichzeitig bewegt sich der zweite Kolben 2-2 durch die Kraftübertragung durch das Arbeitsfluid bei der Darstellung gemäß Figur 4 nach links in Richtung einer Verkleinerung des Volumens der zweiten Fluidkammer 3-2. Befindet sich bei Inbetriebnahme der Spritzpistole noch Luft in der zweiten Fluidkammer 3-2, kann ein (nicht gezeigtes) Auslassventil für diese Luft vorgesehen sein. Der erste Kolben 2-1 wird so weit in Richtung einer Vergrößerung des Volumens der ersten Fluidkammer 3-1 bewegt, bis der erste Kolben 2-1 an einen Anschlag anschlägt, der von einer Zylinderwand bereitgestellt werden kann oder - wie bei der Spritzpistole des zweiten Ausführungsbeispiels - von einer Einstellschraube. Anschließend schaltet die Steuervorrichtung 28 das erste Fluidventil 44 so um, dass ein Fluiddurchgang von der Leitung 25 in die Leitung 47 bereitgestellt wird. Ferner wird das dritte Fluidventil 45 so geschaltet, dass ein Fluiddurchgang von der Leitung 46 zur Spritzdüse 22 geöffnet wird.

Durch die Druckbeaufschlagung des Fluidreservoirs 24 wird nun das Fluid 26 durch das erste Fluidventil 44 und die Leitung 47 in die zweite Fluidkammer 3-2 gedrückt. Alternativ kann auch wie bei der Spritzpistole des dritten Ausführungsbeispiels das Fluid z. B. durch eine Pumpe unter Druck gesetzt werden. Hierdurch wird der zweite Kolben 2-2 in Richtung einer Vergrößerung des Volumens der zweiten Fluidkammer 3-2 bewegt. Gleichzeitig wird durch die Kommunikation der beiden Druckkammern 4-1 und 4-2 der erste Kolben 2-1 in Richtung einer Verkleinerung des Volumens der ersten Fluidkammer 3-1 bewegt, wodurch Fluid aus der ersten Fluidkammer 3-1 über die Leitung 46, durch das dritte Fluidventil 45 hindurch zum Fluidventil 48 gedrückt wird.

Nun kann wie bei dem zweiten und dritten Ausführungsbeispiel das Fluidventil 48 für das bei der Kalibrierung definierte, vorab festgelegte Zeitintervall geöffnet werden, um das Fluid als Fluidstrahl 23 auszustoßen. Die Ausstoßvorgänge können so oft wiederholt werden, bis der erste Kolben 2-1 die definierte Position erreicht hat, was - wie vorstehend erläutert - von dem ersten Sensor 29-1 erfasst wird. Nach Abschluss des letzten Ausstoßvorgangs schaltet dann die Steuervorrichtung 28 das dritte Fluidventil 45 derart, dass der Fluiddurchgang von der Leitung 46 zum Fluidventil 48 gesperrt ist. Das dritte Fluidventil 45 wird in diesem Fall insbesondere in die vollständig sperrende Mittelstellung gebracht. Daraufhin wird das erste Fluidventil 44 umgeschaltet, so dass ein Fluiddurchgang von der Leitung 25 zu der Leitung 46 geöffnet wird. Nun wird das dritte Fluidventil 45 in eine Stellung gebracht, bei welcher ein Durchgang von der Leitung 47 zum Fluidventil 48 bereitgestellt wird. Es wird nun durch die Druckbeaufschlagung des Fluidreservoirs 24 Fluid 26 durch das erste Fluidventil 44 und die Leitung 46 in die erste Fluidkammer 3-1 gedrückt. Hierdurch wird der erste Kolben 2-1 in Richtung einer Vergrößerung des Volumens der ersten Fluidkammer 3-1 bewegt. Gleichzeitig wird der zweite Kolben 2-2 in Richtung einer Verkleinerung des Volumens der zweiten Fluidkammer 3-2 bewegt, wodurch das in der zweiten Fluidkammer 3-2 befindliche Fluid durch die Leitung 47 und durch das dritte Fluidventil 45 hindurch zum Fluidventil 48 gedrückt wird. Anschließend kann eine neue Folge mit Ausstoßvorgängen beginnen.

In den vorhergehend beschriebenen vier Ausführungsbeispielen ist es außerdem möglich, keinen Speicher 54 zu verwenden. Stattdessen kann der auf das Fluid in der Fluidkammer 3 ausgeübte Druck, der vorab festgelegt wurde, mechanisch mittels eines Druckventils, mittels einer Pumpe, z. B. über die Regelung der Drehzahl der Pumpe, oder mittels anderer an sich bekannter Techniken eingestellt oder geregelt werden.

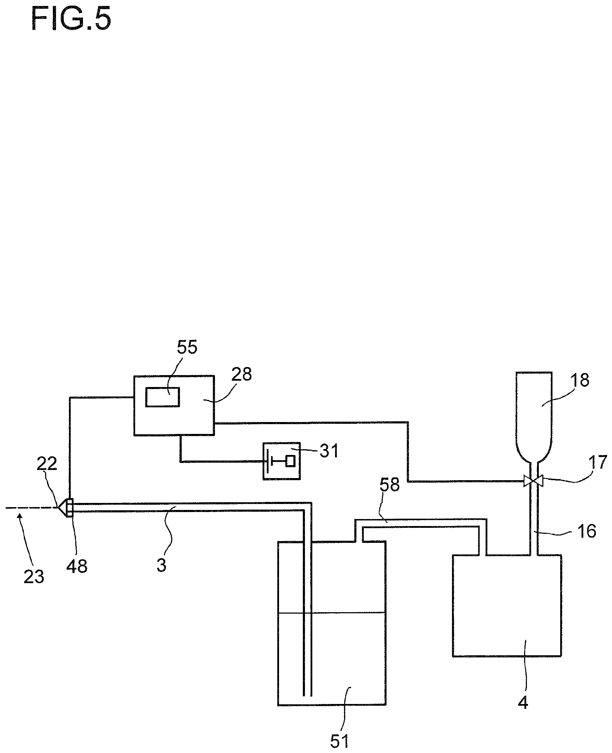

Im Folgenden wird ein fünftes Ausführungsbeispiel der Spritzpistole mit Bezug zur Figur 5 erläutert:
In dem fünften Ausführungsbeispiel werden Teile, welche die gleiche Funktion wie in vorhergehenden Ausführungsbeispielen haben, mit denselben Bezugszeichen bezeichnet. Die Funktion dieser Teile ist auch dieselbe wie in den vorhergehenden Ausführungsbeispielen, so dass die Beschreibung dieser Teile im Detail nicht wiederholt wird.

Das fünfte Ausführungsbeispiel ist ähnlich dem ersten Ausführungsbeispiel. Allerdings wird in diesem Fall die Fluidkammer 3 nicht von einem Zylinder gebildet, sondern von einer Leitung, welche, wie in Figur 5 gezeigt, in das in dem Fluidreservoir 51 befindliche Fluid eingetaucht ist. In dem Fluidreservoir 51 befindet sich unten das Fluid und oberhalb der Oberfläche des Fluids ein gasdicht abgeschlossenes Luftreservoir. Dieses Luftreservoir ist über eine Druckleitung 58 mit einer Druckkammer 4 verbunden. Die Druckkammer 4 ist wiederum wie beim ersten Ausführungsbeispiel über eine Leitung 16 und ein Druckgasventil 17 mit einer Druckluftflasche 18 verbunden. Das Druckgasventil 17 wird von der Steuervorrichtung 28 so gesteuert, dass ein konstanter vorab festgelegter Druck auf das in dem Fluidreservoir 51 befindliche Fluid ausgeübt wird. Auf diese Weise wird gewährleistet, dass sich in der als Leitung ausgebildeten Fluidkammer 3 immer ein unter Druck befindliches Fluid befindet.

Wie bei dem ersten Ausführungsbeispiel ist direkt vor der Spritzdüse 22 das Fluidventil 48 vorgesehen, welches über die Steuervorrichtung 28 angesteuert wird. In der Steuervorrichtung 28 ist in diesem Fall ein Timer vorgesehen, welcher die Öffnungszeit des Fluidventils 48 beim Ausstoßen des Fluidstrahls 23 bestimmt. Wie beim ersten Ausführungsbeispiel wird nach dem Betätigen des Auslösers 31 mittels der Steuervorrichtung 28 das Fluidventil 28 für ein vorab festgelegtes Zeitintervall geöffnet und ein definiertes Volumen oder ein definiertes Gewicht des Fluids wird durch die Spritzdüse 22 ausgestoßen.

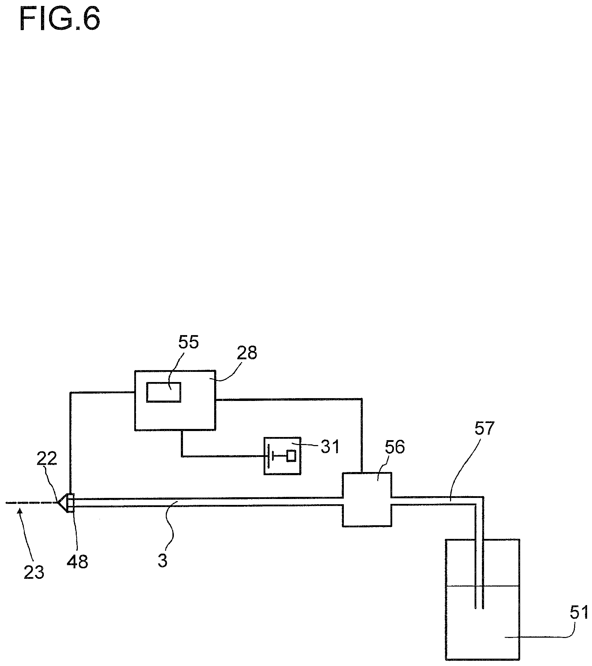

Im Folgenden wird ein sechstes Ausführungsbeispiel der Spritzpistole mit Bezug zur Figur 6 erläutert:
In dem sechsten Ausführungsbeispiel werden Teile, welche die gleiche Funktion wie in vorhergehenden Ausführungsbeispielen haben, mit denselben Bezugszeichen bezeichnet. Die Funktion dieser Teile ist auch dieselbe wie in den vorhergehenden Ausführungsbeispielen, so dass die Beschreibung dieser Teile im Detail nicht wiederholt wird.

Der Aufbau des sechsten Ausführungsbeispiels der Spritzpistole ähnelt dem Aufbau des fünften Ausführungsbeispiels der Spritzpistole. Allerdings ist in diesem Fall zwischen der als Leitung ausgebildeten Fluidkammer 3 und dem Fluidreservoir 51 eine Fluidpumpe 56 angeordnet. Eine Einrichtung zum Bereitstellen von Druckluft ist in diesem Fall nicht erforderlich.

An das von dem Fluidventil 48 abgewandte Ende der Fluidkammer 3 schließt sich die Fluidpumpe 56 an, die über die Leitung 57 mit dem Fluidreservoir 51 verbunden ist. Mittels der Fluidpumpe 56 wird das in dem Fluidreservoir 51 befindliche Fluid herausgepumpt und in die Fluidkammer 3 hineingepumpt. Außerdem kann ein Bypass vorgesehen sein, über welchen das Fluid zurück in das Fluidreservoir 51 gelangen kann, wenn der auf das Fluid ausgeübte Druck zu hoch wird. Die Fluidpumpe 56 ist elektrisch mit der Steuervorrichtung 28 gekoppelt, sodass sie von der Steuervorrichtung 28 angesteuert werden kann. Die Ansteuerung erfolgt derart, dass immer ein konstanter Druck auf das in der Fluidkammer 3 befindliche Fluid ausgeübt wird. Hierfür kann beispielsweise die Drehzahl der Fluidpumpe geregelt werden.

Der Ausstoßvorgang erfolgt dann auf die gleiche Weise wie bei dem fünften Ausführungsbeispiel.

Die Spritzpistolen es zweiten bis sechsten Ausführungsbeispiels sowie die von diesen Spritzpistolen ausgeführten Verfahren werden insbesondere mit den Pflanzenschutzmitteln durchgeführt, die einleitend und mit Bezug zu dem ersten Ausführungsbeispiel genannt wurden.

Bei den vorstehend beschriebenen Ausführungsbeispielen ist das Fluidventil 48 direkt bei der Spritzöffnung 22 angeordnet. In einem weiteren siebten Ausführungsbeispiel wurde experimentell untersucht, wie sich der Abstand des Fluidventils 48 von der Spritzöffnung 22 auf das Nachtropfverhalten bei der Düse beim Ausstoß von Fluiden mit verschiedenen Viskositäten auswirkt.

Der Aufbau des siebten Ausführungsbeispiels entspricht bis auf dem Abstand des Fluidventils 48 von der Spritzöffnung 22 dem Aufbau des ersten Ausführungsbeispiels.

Das Fluidventil 48 war über einen Schlauch mit der Spritzdüse 22 verbunden. Der Außendurchmesser des Schlauches war 8 mm, der Innendurchmesser 6 mm. Als Düse wurde eine Vollstrahldüse Lechler 544.320 eingesetzt.

Die Spritzdüse 22, in der Spritzöffnung ausgebildet ist, wurde 10 cm über einer Applikationsfläche positioniert, die eine Streckenlänge von 120 cm einnimmt. Zudem wurde die Spritzdüse 22 so ausgerichtet, dass der Applikationsstrahl am Ende der Strecke ebenso 10 cm über die Applikationsfläche hinwegfliegt. Um den Verlust an Fluid während des Ausstoßvorgangs auf der Applikationsfläche zu bemessen, wurde zuvor tariertes Papier ausgelegt. Der Versuch wurde dann wie folgt durchgeführt: Nach dem Befüllen eines Fluidreservoirs wurde das System mit der zu prüfenden Substanz konditioniert, d. h. ein Fluid mit einer bestimmten Viskosität wurde in das Fluidreservoir eingefüllt. Danach wurde zur Fehlervermeidung die Spritzdüse 22 direkt vor der ersten Applikation abgetupft. Jedes Versuchsglied besteht aus drei Applikationen, die bei einem Sprühdruck von 3 bar durchgeführt wurden. Jede Applikation dauerte 1,5 Sekunden an. um ein mögliches Nachtropfen zu berücksichtigen, wurde zwischen jede Abgabe 8,5 Sekunden gewartet. Am Ende wurde das Restfluid von der Spritzdüse 22 mit dem Papier aufgenommen und ausgewogen.

In der folgenden Tabelle sind die Versuchsergebnisse dargestellt:

| Einsatzstoff | | | Schlauch | | Menge | Bemerkungen | |
|---|---|---|---|---|---|---|---|
| BAS 310 63 I | Wasser | Viskosität | Typ | Länge | aus 3 Applikationen [g] | Applikationsweg | Düsenmündung |
| 1 | 3 | 123,8 mPa.s | Festo 8 | 0 cm | 0,03 | vereinzelt sehr kleine Tröpfchen auf Strecke | Kein Nachtropfen an der Düse |
| 1 | 2 | 215,2 mPa.s | Festo 8 | 0 cm | 0,00 | vereinzelt sehr kleine Tröpfchen auf Strecke | Kein Nachtropfen an der Düse |
| 1 | 1 | 579,0 mPa.s | Festo 8 | 0 cm | 0,01 | vereinzelt sehr kleine Tröpfchen auf Strecke | Kein Nachtropfen an der Düse |
| 1 | 3 | 123,8 mPa.s | Festo 8 | 50 cm | 0,17 | Einige Tropfen erkennbar | Tropft etwas nach |
| 1 | 2 | 215,2 mPa.s | Festo 8 | 50 cm | 0,23 | Einige Tropfen erkennbar | Tropft etwas nach |
| 1 | 1 | 579,0 mPa.s | Festo 8 | 50 cm | 0,45 | Einige Tropfen erkennbar | Tropft etwas nach |
| 1 | 3 | 123,8 mPa.s | Festo 8 | 100 cm | 0,34 | Vermehrt Tropfen auf der Strecke zu sehen | Tropft an der Düse nach |
| 1 | 2 | 215,2 mPa.s | Festo 8 | 100 cm | 0,41 | Vermehrt Tropfen auf der Strecke zu sehen | Tropft an der Düse nach |
| 1 | 1 | 579,0 mPa.s | Festo 8 | 100 cm | 0,60 | Vermehrt Tropfen auf der Strecke zu sehen | Tropft an der Düse nach |

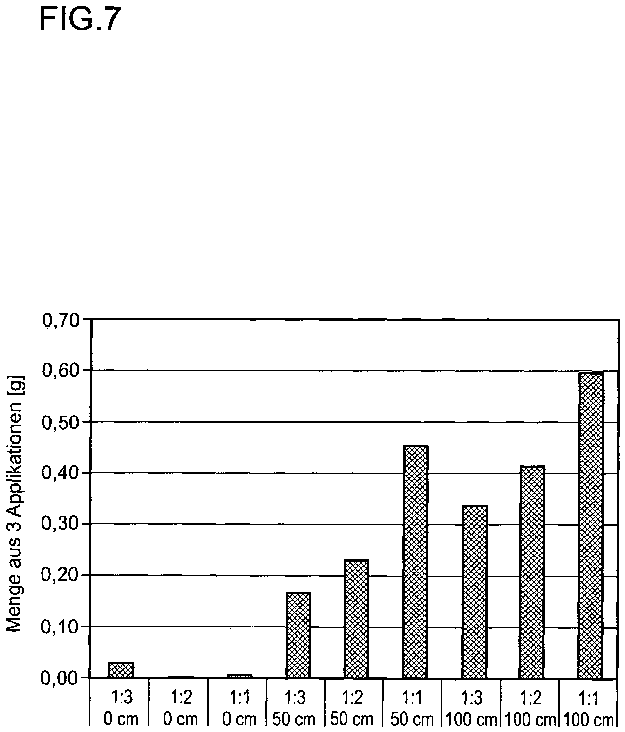

In Fig. 7 ist der Zusammenhang des Fluidverlustes in Abhängigkeit von dem Mischverhältnis zwischen dem Wirkstoff und Wasser, d.h. der Viskosität des Fluids, und des Abstands zwischen der Spritzdüse 22 und dem Fluidventil 28 dargestellt.

Bei den Versuchen hat sich ergeben, dass die Applikationszeit auf den Fluidverlust keinen Einfluss hat, da sobald der Sprühstrahl aufgebaut ist, kein Tropfen vom Ziel abweicht. Beim Aufbau des Sprühstrahls und besonders beim Abbau konnten jedoch Tropfen auf der Applikationsstrecke registriert werden. Dazu kommt noch das Nachtropfen an der Düsenöffnung. Die Ergebnisse der Versuche zeigen einen größeren Verlust bei zunehmendem "Totvolumen" zwischen dem Ventil 48 und der Spritzdüse 22, d. h. bei einem größeren Abstand zwischen dem Ventil 48 und der Spritzdüse 22. Insbesondere bei einem Abstand von mehr als 50 cm ergibt sich ein unerwünschter Fluidverlust. Dabei ist der Verlust auf dem Applikationsweg umso höher, desto viskoser der Zustand des Fluids, d. h. der Spritzbrühe, ist. Die Konsistenz der Formulierung hat somit auch großen Einfluss auf den Fluidverlust. Eine mögliche Erklärung hierfür ist, dass das viskosere Fluid mehr Energie aufnimmt, die nach dem Schließen des Fluidventils 48 wieder abgegeben wird. Hieraus ergibt sich ein Nachtropfen. Ein weiterer Hinweis darauf war ein benötigter steilerer Anstellwinkel der Spritzdüse 22 bei viskoseren Fluiden. Dieser steilere Anstellwinkel wurde benötigt, um das Ziel zu erreichen.

Bei Vorversuchen konnte außerdem festgestellt werden, dass eine Verjüngung des Schlauches zwischen der Spritzdüse 22 und dem Fluidventil 48 zu geringeren Verlusten führt. Eine Erhöhung des Drucks resultiert in einem erhöhten Fluidverlust auf der Wegstrecke von der Spritzdüse 22 zum Ziel. Fluidverluste können jedoch weitestgehend ausgeschlossen werden, wenn ein "Totvolumen" vom Fluidventil 48 zur Spritzdüse 22 vermieden wird, d. h. wenn die Spritzdüse 22 direkt bei dem Fluidventil 48 angeordnet ist.

### Bezugszeichenliste:

- 1: Zylinder
- 1-1: erster Zylinder
- 1-2: zweiter Zylinder
- 2: Kolben
- 3: Fluidkammer; erste Fluidkammer
- 3-1: erste Fluidkammer
- 3-2: zweite Fluidkammer
- 4: Druckkammer
- 4-1: erste Druckkammer
- 4-2: zweite Druckkammer
- 5: Zylinderöffnung, erste Zylinderöffnung
- 5-1: erste Zylinderöffnung
- 5-2: zweite Zylinderöffnung
- 6: Zylinderöffnung, zweite Zylinderöffnung
- 7: erster Anschluss
- 8: Druckluftleitung
- 9: Schaft des Kolbens 2
- 10: Lager
- 11: Zylinder
- 12: Platte
- 13: Druckfeder
- 14: Schraube
- 15: Abschlusswand
- 16: Leitung
- 17: Druckgasventil
- 18: Einrichtung zum Bereitstellen von Druckluft, Druckluftflasche
- 19: Absperrventil
- 20: Leitung
- 21: Fluidventil; erstes Fluidventil
- 22: Spritzdüse
- 23: Fluidstrahl
- 24: Fluidreservoir
- 25: Leitung
- 26: Fluid
- 27: Leitung
- 28: Steuervorrichtung
- 29: Sensor; erster Sensor
- 30: Permanentmagnet
- 31: Auslöser
- 32: zweiter Anschluss
- 33: dritter Anschluss
- 34: zweite Fluidkammer
- 35: drittes Fluidventil
- 36: zweites Fluidventil
- 37: Anschluss
- 38: Leitung
- 39: Leitung
- 40: Leitung
- 41: Anschluss
- 42: Leitung
- 43: Reservoir
- 44: Fluidventil; erstes Fluidventil
- 45: Fluidventil; drittes Fluidventil
- 46: Leitung
- 47: Leitung
- 48: Fluidventil
- 49: Fluidventil
- 50: Fluidleitung
- 51: Fluidreservoir
- 52: Drucksensor
- 53: Zylinderöffnung
- 54: Speicher
- 55: Timer
- 56: Fluidpumpe
- 57: Leitung
- 58: Druckgasleitung

## Patentansprüche

1. Verfahren zum Ausstoßen eines Pflanzenschutzmittels mittels einer Fluidkammer (3), die über ein elektrisch ansteuerbares Fluidventil (48) mit einer Spritzöffnung (22) kommuniziert, wobei die Spritzöffnung von einer Spritzdüse umfasst ist, wobei der Abstand zwischen dem Fluidventil (48) und der Spritzöffnung (22) geringer als 50 cm ist, wobei das Verfahren folgende Schritte umfasst:
- Festlegen eines Drucks und einer Dauer eines Zeitintervalls zum Ausstoßen des Pflanzenschutzmittels,
- Füllen des Pflanzenschutzmittels in die Fluidkammer (3), wobei das Pflanzenschutzmittel ein gelartiges Fluid ist, das bei 25°C eine dynamische Viskosität bestimmt durch Rotationsviskosimetrie nach Brookfield und einem Schergefälle von 100 s⁻¹ besitzt, die im Bereich von 30 bis 1000 mPa.s liegt,
- Ausüben des vorab festgelegten Drucks auf das in der Fluidkammer (3) befindliche Pflanzenschutzmittel und
- Öffnen des Fluidventils (48) mittels eines elektrischen Steuersignals für das vorab festgelegte Zeitintervall und Schließen des Fluidventils (48) nach Ablauf des Zeitintervalls, sodass ein definiertes Volumen oder ein definiertes Gewicht des Pflanzenschutzmittels durch die Spritzdüse (22) als Strahl (23) ausgestoßen wird.

2. Verfahren nach Anspruch 1, **dadurch gekennzeichnet, dass** der Druck, der auf das in der Fluidkammer (3) befindliche Pflanzenschutzmittel ausgeübt wird, während des Zeitintervalls, in dem das Fluidventil (48) geöffnet ist, konstant gehalten wird.

3. Verfahren nach Anspruch 1 oder 2, **dadurch gekennzeichnet, dass** der auf das in der Fluidkammer (3) befindliche Pflanzenschutzmittel ausgeübte Druck mittels eines unter Druck stehenden Gases oder einer Pumpe erzeugt wird.

4. Verfahren nach einem der vorstehenden Ansprüche, **dadurch gekennzeichnet, dass** der Abstand zwischen dem Fluidventil (48) und der Spritzöffnung (22) geringer als 10 cm ist.

5. Verfahren nach einem der vorstehenden Ansprüche, **dadurch gekennzeichnet, dass** das Fluidventil (48) direkt bei der Spritzöffnung (22) angeordnet ist.

6. Verfahren nach einem der vorstehenden Ansprüche, **dadurch gekennzeichnet, dass** das Pflanzenschutzmittel ein gelartiges Fluid ist, das bei 25°C eine dynamische Viskosität bestimmt durch Rotationsviskosimetrie nach Brookfield und einem Schergefälle von 100 s⁻¹ besitzt, die im Bereich von 50 bis 500 mPa.s liegt.

7. Verfahren nach einem der vorstehenden Ansprüche, **dadurch gekennzeichnet, dass** sich die rheologischen Eigenschaften des Pflanzenschutzmittels in einem Temperaturbereich von 15 °C bis 35 °C nur so ändern, dass die Ausstoßmenge je Zeiteinheit bei gegebenem Druck bei einer bestimmten Spritzöffnung (22) nur in einem Bereich von +/-10%, insbesondere in einem Bereich von +/- 5%, schwankt.

8. Verfahren nach einem der vorhergehenden Ansprüche, **dadurch gekennzeichnet, dass** das die Dauer des Zeitintervalls durch eine vorab durchgeführte Kalibrierung festgelegt wird, bei der die Abhängigkeit des ausgestoßenen Volumens oder Gewichts eines Pflanzenschutzmittels einer bestimmten Viskosität von dem ausgeübten Druck und der Dauer des Zeitintervalls ermittelt wird.

## Claims

1. A method for the expulsion of a plant protection composition by means of a fluid chamber (3) which communicates with a spray orifice (22) via an electrically activatable fluid valve (48), the spray orifice being surrounded by a spray nozzle, the distance between the fluid valve (48) and the spray orifice (22) being less than 50 cm,
the method comprising the following steps of:
- setting a pressure and a length of a time interval for the expulsion of the plant protection composition,
- filling the plant protection composition into the fluid chamber (3), the plant protection composition being a gel-like fluid which has at 25°C a dynamic viscosity which is determined by Brookfield's rotational viscometry with a shear gradient of 100 s⁻¹ and is in the range of from 30 to 1000 mPa.s,
- exerting the previously set pressure on the plant protection composition located in the fluid chamber (3), and
- opening the fluid valve (48) for the previously set time interval by means of an electric control signal and closing the fluid valve (48) after the end of the time interval so that a defined volume or a defined weight of the plant protection composition is expelled through the spray nozzle (22) as a jet (23).

2. The method according to claim 1, wherein the pressure which is exerted on the plant protection composition located in the fluid chamber (3) is kept constant during the time interval in which the fluid valve (48) is open.

3. The method according to claim 1 or 2, wherein the pressure exerted on the plant protection composition located in the fluid chamber (3) is generated by means of a pressurized gas or a pump.

4. The method according to one of the preceding claims, wherein the distance between the fluid valve (48) and the spray orifice (22) is less than 10 cm.

5. The method according to one of the preceding claims, wherein the fluid valve (48) is arranged directly at the spray orifice (22).

6. The method according to one of the preceding claims, wherein the plant protection composition is a gel-like fluid which has at 25°C a dynamic viscosity which is determined by Brookfield's rotational viscometry with a shear gradient of 100 s⁻¹ and is in the range of from 50 to 500 mPa.s.

7. The method according to one of the preceding claims, wherein the rheological properties of the plant protection composition change within a temperature range of from 15°C to 35°C only such that the quantity expelled per unit time at a given pressure at a particular spray orifice (22) fluctuates only in a range of +/- 10%, in particular in a range of +/- 5%.

8. The method according to one of the preceding claims, wherein the length of the time interval is set by a previously carried out calibration in which the dependence of the expelled volume or weight of a plant protection composition of a particular viscosity on the exerted pressure and the length of the time interval is determined.

## Revendications

1. Procédé permettant d'expulser un produit phytosanitaire au moyen d'une chambre de fluide (3) qui communique avec un orifice de pulvérisation (22) par le biais d'une soupape de fluide (48) pouvant être commandée électriquement, l'orifice de pulvérisation étant entouré par une buse de pulvérisation, la distance entre la soupape de fluide (48) et l'orifice de pulvérisation (22) étant inférieure à 50 cm, le procédé comprenant les étapes suivantes :
- définir une pression et une durée d'un intervalle de temps pour expulser le produit phytosanitaire,
- remplir la chambre de fluide (3) avec le produit phytosanitaire, le produit phytosanitaire étant un fluide de type gel qui présente, à 25 °C, une viscosité dynamique dans la plage de 30 à 1000 mPa.s, laquelle viscosité dynamique est déterminée par viscosimétrie rotationnelle selon Brookfield et à un taux de cisaillement de 100 s⁻¹,
- exercer la pression préalablement définie sur le produit phytosanitaire se trouvant dans la chambre de fluide (3) et
- ouvrir la soupape de fluide (48) au moyen d'un signal de commande électrique pendant l'intervalle de temps préalablement défini et fermer la soupape de fluide (48) au terme de l'intervalle de temps, de sorte qu'un volume défini ou un poids défini du produit phytosanitaire soit expulsé sous forme de jet (23) à travers la buse de pulvérisation (22).

2. Procédé selon la revendication 1, **caractérisé en ce que** la pression qui est exercée sur le produit phytosanitaire se trouvant dans la chambre de fluide (3) est maintenue constante pendant l'intervalle de temps lors duquel la soupape de fluide (48) est ouverte.

3. Procédé selon la revendication 1 ou 2, **caractérisé en ce que** la pression exercée sur le produit phytosanitaire se trouvant dans la chambre de fluide (3) est produite au moyen d'un gaz sous pression ou d'une pompe.

4. Procédé selon l'une des revendications précédentes, **caractérisé en ce que** la distance entre la soupape de fluide (48) et l'orifice de pulvérisation (22) est inférieure à 10 cm.

5. Procédé selon l'une des revendications précédentes, **caractérisé en ce que** la soupape de fluide (48) est disposée directement auprès de l'orifice de pulvérisation (22).

6. Procédé selon l'une des revendications précédentes, **caractérisé en ce que** le produit phytosanitaire est un fluide de type gel qui présente, à 25 °C, une viscosité dynamique dans la plage de 50 à 500 mPa.s, laquelle viscosité dynamique est déterminée par viscosimétrie rotationnelle selon Brookfield et à un taux de cisaillement de 100 s⁻¹.

7. Procédé selon l'une des revendications précédentes, **caractérisé en ce que** les propriétés rhéologiques du produit phytosanitaire dans une plage de température de 15 °C à 35 °C ne varient que de telle sorte que la quantité expulsée par unité de temps à une pression donnée pour un orifice de pulvérisation déterminé (22) ne fluctue que dans une plage de +/-10 %, en particulier dans une plage de +/- 5 %.

8. Procédé selon l'une des revendications précédentes, **caractérisé en ce que** la durée de l'intervalle de temps est définie par un étalonnage effectué préalablement, lors duquel la dépendance du volume ou du poids expulsé d'un produit phytosanitaire de viscosité déterminée en fonction de la pression exercée et de la durée de l'intervalle de temps est déterminée.
